(19) Europäisches Patentamt
European Patent Office
Office européen des brevets

(11) **EP 3 770 121 A1**

(12) **EUROPEAN PATENT APPLICATION**
published in accordance with Art. 153(4) EPC

(43) Date of publication:
**27.01.2021  Bulletin 2021/04**

(51) Int Cl.:
**C01G 53/00** (2006.01)          **H01M 4/505** (2010.01)
**H01M 4/525** (2010.01)

(21) Application number: **19772016.2**

(22) Date of filing: **22.03.2019**

(86) International application number:
**PCT/JP2019/012264**

(87) International publication number:
**WO 2019/182153 (26.09.2019 Gazette 2019/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **23.03.2018  JP 2018056857**

(71) Applicants:
• **SUMITOMO CHEMICAL COMPANY LIMITED**
**Chuo-ku**
**Tokyo 104-8260 (JP)**

• **Tanaka Chemical Corporation**
**Fukui-shi, Fukui 910-3131 (JP)**

(72) Inventors:
• **NAGAO Daisuke**
**Niihama-shi, Ehime 792-8521 (JP)**
• **KAGEURA Jun-ichi**
**Niihama-shi, Ehime 792-8521 (JP)**
• **MAEDA Yusuke**
**Fukui-shi, Fukui 910-3131 (JP)**

(74) Representative: **Vossius & Partner**
**Patentanwälte Rechtsanwälte mbB**
**Siebertstrasse 3**
**81675 München (DE)**

(54) **LITHIUM-CONTAINING METAL OXIDE, POSITIVE ELECTRODE ACTIVE MATERIAL FOR LITHIUM SECONDARY BATTERIES, POSITIVE ELECTRODE FOR LITHIUM SECONDARY BATTERIES, AND LITHIUM SECONDARY BATTERY**

(57)     A lithium composite metal oxide containing a secondary particle that is an aggregate of primary particles, in which, when a cross-sectional image of the secondary particle is acquired, and the cross-sectional image is observed, a content proportion of reference primary particles present in a central part of the secondary particle is 20% or more and 50% or less, and a content proportion of reference primary particles present in a surface part of the secondary particle is 30% or more and 100% or less.

FIG. 2

EP 3 770 121 A1

**Description**

[Technical Field]

The present invention relates to a lithium composite metal oxide, a positive electrode active material for a lithium secondary battery, a positive electrode for a lithium secondary battery, and a lithium secondary battery.
The present application claims priority based on Japanese Patent Application No. 2018-056857 filed in Japan on March 23, 2018, the content of which is incorporated herein by reference.

[Background Art]

Lithium composite metal compounds are used as positive electrode active materials for lithium secondary batteries. Attempts of putting lithium secondary batteries into practical use not only for small-sized power sources in mobile phone applications, notebook personal computer applications, and the like but also for medium-sized or large-sized power sources in automotive applications, power storage applications, or the like have already been underway.
In order to further expand the application of lithium secondary batteries, there is demand for a lithium secondary battery having more favorable battery characteristics. For example, Patent Literature 1 describes, for the purpose of improving cycle characteristics, a positive electrode active material for a non-aqueous electrolyte secondary battery that includes secondary particles, each of which is an aggregate of a plurality of primary particles, and has a multimodal distribution curve, which shows the appearance frequency of the aspect ratios of the primary particles. In the positive electrode active material for a non-aqueous electrolyte secondary battery described in Patent Literature 1, primary particles having a high aspect ratio and primary particles having a low aspect ratio are present in a mixed form in the same secondary particle. The object of the positive electrode active material for a non-aqueous electrolyte secondary battery described in Patent Literature 1 is to suppress the generation of cracks in the grain boundaries between the primary particles caused by the expansion of the primary particles in the coaxial direction.

[Citation List]

[Patent Literature]

[Patent Literature 1]

PCT International Publication No. WO2016/002158

[Summary of Invention]

[Technical Problem]

For lithium secondary batteries, there is a demand for an improvement in battery characteristics such as an improvement in the charge and discharge efficiency under a high voltage.
For example, for the positive electrode active material as described in Patent Literature 1, there is room for an improvement from the viewpoint of obtaining a high charge and discharge efficiency, for example, under a high voltage in which the upper limit voltage is set to 4.45 V.
The present invention has been made in view of such circumstances, and an object of the present invention is to provide a lithium composite metal oxide useful for lithium secondary batteries that exhibit a high initial charge and discharge efficiency under a high voltage, and a positive electrode active material for a lithium secondary battery, a positive electrode for a lithium secondary battery, and a lithium secondary battery each using the same.

[Solution to Problem]

That is, the present invention includes the inventions of the following [1] to [11].

[1] A lithium composite metal oxide containing a secondary particle that is an aggregate of primary particles, in which, when a cross-sectional image of the secondary particle is acquired, and the cross-sectional image is observed, a content proportion of reference primary particles present in a central part of the secondary particle is 20% or more and 50% or less, and a content proportion of reference primary particles present in a surface part of the secondary particle is 30% or more and 100% or less.
(Here, the reference primary particles refer to primary particles that are observed in the cross-sectional image of the secondary particle and have an aspect ratio of 2.0 or more.

The central part refers to a part surrounded by an imaginary circle, which has a center at a centroid position of a figure surrounded by an outer edge of the cross-sectional image of the secondary particle and has a radius of r calculated from the following expression in which an area of the figure is denoted by S.

$$r = (S/\pi)^{0.5}/2$$

The surface part refers to a part obtained by removing the imaginary circle from the figure.)

[2] A lithium composite metal oxide containing a secondary particle that is an aggregate of primary particles, in which, in a surface part of the secondary particle, the primary particles that have an elongated shape are radially arranged and aggregated outward from a center of the secondary particle, a content proportion of the reference primary particles present in a central part of the secondary particle is lower than a proportion of the reference primary particles present in the surface part, when a cross-sectional image of the secondary particle is acquired, and the cross-sectional image is observed, the content proportion of the reference primary particles present in the central part of the secondary particle is 20% or more and 50% or less, and the content proportion of the reference primary particles present in the surface part of the secondary particle is 30% or more and 100% or less.

(Here, the reference primary particles refer to primary particles that are observed in the cross-sectional image of the secondary particle and have an aspect ratio of 2.0 or more.

The central part refers to a part surrounded by an imaginary circle, which has a center at a centroid position of a figure surrounded by an outer edge of the cross-sectional image of the secondary particle and has a radius of r calculated from the following expression in which an area of the figure is denoted by S.

$$r = (S/\pi)^{0.5}/2$$

The surface part refers to a part obtained by removing the imaginary circle from the figure.)

[3] The lithium composite metal oxide according to [2], in which the content proportion of the reference primary particles present in the central part of the secondary particles is 20% or more and less than 40%, and the content proportion of the reference primary particles present in the surface part of the secondary particles is 40% or more and 100% or less.

[4] The lithium composite metal oxide according to any one of [1] to [3], in which, in the cross-sectional image, a difference between an average value of aspect ratios of the primary particles present in the central part of the secondary particle and an average value of aspect ratios of the primary particles present in the surface part of the secondary particles is 0.30 or more and 1.0 or less.

[5] The lithium composite metal oxide according to any one of [1] to [4], in which, in the cross-sectional image, an average value of the aspect ratios of the primary particles present in the surface part of the secondary particle is 1.85 or more and 3.00 or less.

[6] The lithium composite metal oxide according to any one of [1] to [5], in which, in the cross-sectional image, an average value of the aspect ratios of the primary particles present in the central part of the secondary particle is 1.66 or more and 2.00 or less.

[7] The lithium composite metal oxide according to any one of [1] to [6], in which the lithium composite metal oxide is represented by Formula (I).

$$Li[Li_x(Ni_{(1-y-z-w)}Co_yMn_zM_w)_{1-x}]O_2 ... \qquad (I)$$

(In Formula (I), $-0.1 \leq x \leq 0.2$, $0 \leq y \leq 0.5$, $0 \leq z \leq 0.5$, $0 \leq w \leq 0.1$, and $y + z + w < 1$ are satisfied, and M represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.)

[8] The lithium composite metal oxide according to [7], in which a range of x in Formula (I) satisfies $0 < x \leq 0.2$.

[9] A positive electrode active material for a lithium secondary battery, including: the lithium composite metal oxide according to any one of [1] to [8].

[10] A positive electrode for a lithium secondary battery, including: the positive electrode active material for a lithium secondary battery according to [9].

[11] A lithium secondary battery including: the positive electrode for a lithium secondary battery according to [10].

[Advantageous Effects of Invention]

According to the present invention, it is possible to provide a lithium composite metal oxide having a high charge and discharge efficiency under a high voltage in the case of being used as a positive electrode active material for a lithium secondary battery.

[Brief Description of Drawings]

Fig. 1A is a schematic configuration view illustrating an example of a lithium secondary battery of the present invention.
Fig. 1B is a schematic configuration view illustrating the example of the lithium secondary battery of the present invention.
Fig. 2 is a schematic view of a cross section of a secondary particle in a lithium composite metal oxide of the present invention.
Fig. 3 is a schematic view for describing an aspect ratio in the present specification.
Fig. 4 is a schematic view of a cross section of a secondary particle in a lithium composite metal oxide to which the present invention is not applied.

[Description of Embodiments]

<Lithium Composite Metal Oxide>

The present embodiment is a lithium composite metal oxide containing a secondary particle, each of which is an aggregate of primary particles. The secondary particle is an aggregate of the primary particles. The lithium composite metal oxide of the present embodiment contains reference primary particles. Here, the reference primary particles refer to primary particles that are observed in a cross-sectional image of the secondary particle and have an aspect ratio of 2.0 or more.

In the lithium composite metal oxide of the present embodiment, when the cross-sectional image of the secondary particle is acquired, and the cross-sectional image is observed, the content proportion of the reference primary particles in the central part of the secondary particle is 20% or more and 50% or less, and the content proportion of the reference primary particles in the surface part of the secondary particle is 30% or more and 100% or less.

In the present embodiment, the "central part" refers to a part surrounded by an imaginary circle. The imaginary circle has a center at the centroid C of a figure surrounded by the outer edge of the cross section of the secondary particle and has a radius of r calculated from the following expression in which the area of the figure is denoted by S. That is, 2r is equivalent to the radius of an area-equivalent circle 24.

$$r = (S/\pi)^{0.5}/2$$

In the present embodiment, the "surface part" refers to a part obtained by removing the imaginary circle from the cross section of the figure.

Furthermore, the lithium composite metal oxide of the present embodiment is a lithium composite metal oxide containing secondary particles, each of which is an aggregate of primary particles, in which, in the surface part of the secondary particle, the primary particles that have an elongated shape are radially arranged and aggregated outward from the center of the secondary particle. In this embodiment, the content proportion of the reference primary particles present in the central part of the secondary particle is lower than the proportion of the reference primary particles present in the surface part.

In this embodiment, when the cross-sectional image of the secondary particle is acquired, and the cross-sectional image is observed, the content proportion of the reference primary particles present in the central part of the secondary particle is 20% or more and 50% or less, and the content proportion of the reference primary particles present in the surface part of the secondary particle is 30% or more and 100% or less. Furthermore, it is preferable that the content proportion of the reference primary particles present in the central part of the secondary particles is 20% or more and less than 40% and the content proportion of the reference primary particles present in the surface part of the secondary particles is 40% or more and 100% or less.

(Here, the reference primary particles refer to primary particles that are observed in the cross-sectional image of the secondary particle and have an aspect ratio of 2.0 or more.

The central part refers to a part surrounded by an imaginary circle. The imaginary circle has a center at a centroid position of a figure surrounded by an outer edge of the cross-sectional image of the secondary particle and has a radius of r calculated from the following expression in which an area of the figure is denoted by S.

$$r = (S/\pi)^{0.5}/2$$

The surface part refers to a part obtained by removing the imaginary circle from the figure.)

<<Method for Measuring Cross-Sectional Structure of Secondary Particle>>

In the present embodiment, the method for measuring the cross-sectional structure of the secondary particle in the lithium composite metal oxide will be described below.

First, the lithium composite metal oxide is processed to obtain the cross section. As a method for obtaining the cross section, a method of obtaining the cross section of the secondary particle by processing the lithium composite metal oxide with a focused ion beam processing apparatus can be exemplified. In addition, the cross section of the lithium composite metal oxide included in a mixture layer of an electrode may be obtained by cutting out a part of a positive electrode produced using the lithium composite metal oxide and processing the part with an ion milling apparatus. Here, as the sample to be cross-section-processed, a lithium composite metal oxide having a maximum diameter of the 50% cumulative volume particle size D50 ($\mu$m) ± 5% is selected. The 50% cumulative volume particle size D50 is obtained by laser diffraction-type particle size distribution measurement. The sample is processed such that the cross section passes through the vicinity of the center of the lithium composite metal oxide particle, and a cross-sectional image in which the maximum diameter of the secondary particle in the obtained cross section is D50 ($\mu$m) ± 5% is selected and observed.

As the sample to be cross-section-processed, not only the powder of the lithium composite metal oxide or an electrode made of the lithium composite metal oxide but also a sample obtained by hardening the powder of lithium composite metal oxide using a resin can be appropriately selected. In addition, as the method for producing the cross section, not only the ion beam method but also polishing or the like can be appropriately selected.

Next, a secondary electron image of the cross section of the lithium composite metal oxide obtained by the above-described processing is observed using a scanning electron microscope or a focused ion beam processing apparatus.

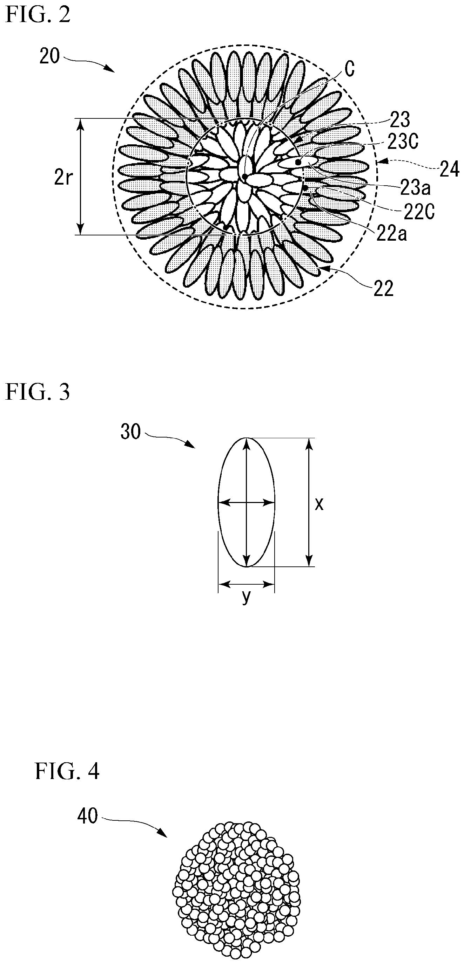

A schematic view of the cross section of the secondary particle in the lithium composite metal oxide of the present embodiment is illustrated in Fig. 2. The shape of the secondary particle and the shape or number of the primary particles illustrated in Fig. 2 are simply examples, and the present invention is not limited thereto.

The lithium composite metal oxide of the present embodiment includes the secondary particles, each of which is the aggregate of the primary particles, and includes reference primary particles having an aspect ratio of 2.0 or more.

In the present embodiment, the reference primary particles that have an elongated shape are aggregated at specific content proportions in the surface part and in the central part of the secondary particle, respectively. The reference primary particles that have an elongated shape are radially aggregated toward the surface part from the central part of the secondary particle.

The "elongated shape" refers to a long shape in which the total length in the longitudinal direction is longer than the length in the direction orthogonal to the longitudinal direction (the maximum lateral width of the reference primary particle).

The expression "radial" refers to a state in which the reference primary particles aggregate with one end facing outward such that the axes of the reference primary particles in the longitudinal direction configure the radius of the secondary particle.

The cross section of a secondary particle 20 illustrated in Fig. 2 is illustrated. In Fig. 2, a circle indicated by reference numeral 24 is a circle having an area equivalent to the area of the cross section of the secondary particle 20 (hereinafter, referred to as "area-equivalent circle 24").

The area-equivalent circle 24 includes an imaginary circle region surrounded by a broken line indicated by reference numeral 23 (hereinafter, referred to as "central part 23") and a portion that is obtained by removing the region of the central part 23 from the area-equivalent circle 24 and is a shaded region illustrated in Fig. 2 (hereinafter, referred to as "surface part 22"). The central part 23 is the region of an imaginary circle having the center at the centroid C of a figure surrounded by the outer edge of the cross section when the area of the figure is denoted by S.

Here, the centroid C of the imaginary circle is calculated by the following method.

The cross-sectional image is loaded into a computer, and a binarization process is performed using image analysis software and a medium value between the maximum brightness and the minimum brightness in the image of the secondary particle. Next, a binarized image in which the inside of the cross section of the secondary particle is converted black and the outside of the cross section of the secondary particle is converted white is obtained. At this time, the cross-sectional image is visually observed to confirm that there is no discrepancy between the inside and the outside of the cross section. In a case where any discrepancy is found, the threshold value used for the binarization process is adjusted.

For example, in a case where the portion that corresponds to the outside of the cross section of the secondary particle in the visually-observed cross-sectional image has a color other than white (gray or black) in the computer image, the threshold value is adjusted such that the portion is colored white in accordance with the visually-observed cross-sectional image.

As the image analysis software, it is possible to appropriately select Image J, Photoshop, or the like.

In the binarized image, the centroid position of the cross section of the secondary particle is calculated using the image analysis software.

In the present embodiment, the cross section of the secondary particle refers to a region surrounded by the outer circumference of the secondary particle, that is, the entire cross-sectional portion of the secondary particle. In addition, the centroid position is a position that becomes the center of the weights of pixels included in the region surrounded by the outer circumference when the weights of the pixels are made uniform. The pixels form the image.

Here, the centroid of the primary particle in the secondary particle 20 shown in Fig. 2 is calculated by the following method.

The cross-sectional image is loaded into a computer, and a binarization process is performed using image analysis software and a medium value between the maximum brightness and the minimum brightness in the image of the secondary particle. Therefore, a binarized image in which the primary particles present in the cross section of the secondary particle are converted black and the outside of the cross section of the secondary particle and the grain boundaries between the primary particles present in the cross section of the secondary particle are converted white is obtained. At this time, the cross-sectional image is visually observed to confirm that there is no discrepancy between the primary particles present in the cross section and the outside of the cross section of the secondary particle and the grain boundaries between the primary particles present in the cross section of the secondary particle. In a case where any discrepancy is found, the threshold value used for the binarization process is adjusted.

For example, in a case where the portions that correspond to the primary particles present in the cross section of the secondary particle in the visually-observed cross-sectional image has a color other than black (gray or white) in the computer image, the threshold value is adjusted such that the portions are colored black in accordance with the visually-observed cross-sectional image.

As the image analysis software, it is possible to appropriately select Image J, Photoshop, or the like.

In the binarized image, the centroid position of the primary particles present in the cross section of the secondary particle is calculated using the image analysis software.

In Fig. 2, regarding the primary particles present on the boundary line between the central part 23 and the surface part 22 in the secondary particle 20, the primary particles having the centroid 23C present in the central part 23 are regarded as the primary particles 23a in the central part, and the primary particles having the centroid 22C present in the surface part 22 are regarded as the primary particles 22a in the surface part.

The content proportion of the reference primary particles in the central part 23 is 20% or more and 50% or less. Furthermore, the content proportion of the reference primary particles in the surface part 22 is 30% or more and 100% or less. When the content proportion of the reference primary particles is in the specific range described above, in the surface part 22, the primary particles that have an elongated shape are radially arranged and aggregated outward from the center of the secondary particle to form an aggregate. In addition, in the central part 23, the primary particles that have an elongated shape and the primary particles having a substantially spherical shape are present in a mixed form.

In the embodiment, "the aspect ratio of the primary particle" will be described using Fig. 3. Fig. 3 illustrates a primary particle 30. The length of the longest diameter of the particle image of the primary particle 30 is denoted by x. The length of the maximum diameter perpendicular to the longest diameter x is denoted by y. The aspect ratio of the primary particle is calculated by dividing x by y (x/y). The aspect ratio is an index that indicates the shape of the primary particle. The x and the y are calculated using a cross-sectional image of the secondary particle captured with a scanning ion microscope (SIM) or a scanning electron microscope (SEM).

In the lithium composite metal oxide of the present embodiment, in the central part of the secondary particle, the content proportion of the reference primary particles in the cross section is preferably 22% or more, more preferably 24% or more, and even more preferably 25% or more in terms of the number ratio. In addition, the upper limit of the content proportion of the reference primary particles in the central part of the secondary particle is preferably 45% or less, more preferably 40% or less, and even more preferably 35% or less in terms of the number ratio.

The upper limit and the lower limit can be a random combination.

In the present embodiment, the content proportion of the reference primary particles is, for example, preferably 22% or more and 45% or less, more preferably 24% or more and 40% or less, and particularly preferably 25% or more and 35% or less.

In the surface part of the secondary particle, the content proportion of the reference primary particles in the cross section is preferably 35% or more, more preferably more than 35%, even more preferably 40% or more, particularly preferably more than 40%, more particularly preferably 45% or more, and most preferably more than 45% in terms of the number ratio. In addition, the upper limit of the content proportion of the reference primary particles in the surface part of the secondary particle is preferably 90% or less, more preferably 80% or less, and even more preferably 70% or less in terms of the number ratio.

The upper limit and the lower limit can be a random combination.

In the present embodiment, the content proportion of the reference primary particles is, for example, preferably 35% or more and 90% or less, more preferably 40% or more and 80% or less, and particularly preferably 45% or more and 70% or less.

In addition, the content proportion of the reference primary particles is even more preferably more than 35% and 90% or less, more particularly preferably more than 40% and 80% or less, and most preferably more than 45% and 70% or less.

In the lithium composite metal oxide of the present embodiment, the secondary particle may include the reference primary particles in the specific presence ratio described above.

In the lithium composite metal oxide of the present embodiment, examples of a preferable combination of the content proportions of the reference primary particles in the central part and in the surface part will be described below:

a combination of the reference primary particles in the central part in a content proportion of 25% or more and 35% or less and the reference primary particles in the surface part in a content proportion of more than 35% and 90% or less,

a combination of the reference primary particles in the central part in a content proportion of 24% or more and less than 40% and the reference primary particles in the surface part in a content proportion of 40% or more and 80% or less,

and a combination of the reference primary particles in the central part in a content proportion of 22% or more and 45% or less and the reference primary particles in the surface part in a content proportion of more than 45% and 70% or less.

In a case where the content proportions of the reference primary particles are in the above-described ranges in the central part and in the surface part of the secondary particle respectively, when lithium ions diffuse from the surface part to the central part of the secondary particle during a discharge reaction, and when lithium ions diffuse from the central part to the surface part during a charge reaction, it becomes easier for the lithium ions to diffuse up to the central part of the secondary particle in a process in which the lithium ions diffuse along the grain boundaries between the primary particles present in the surface part of the secondary particle. Therefore, in a case where the lithium composite metal oxide is used as a positive electrode active material for a lithium secondary battery, it is possible to decrease the reaction resistance of the lithium secondary battery.

In the present embodiment, the secondary particle contained in the lithium composite metal oxide contains the reference primary particles in the specific presence ratio. As a result, the secondary particle becomes an aggregate of the primary particles in which the primary particles that have an elongated shape are radially arranged and aggregated outward from the center of the secondary particle in the surface part. In a case where the secondary particle is in such an aggregated state, it is easy for lithium ions to diffuse up to the central part of the secondary particle when the lithium ions diffuse along the grain boundaries between the primary particles from the surface of the secondary particle. As a result, lithium ions are capable of uniformly diffusing in the central part of the secondary particle. Therefore, the absorption reaction and the desorption reaction of lithium ions uniformly occur. The secondary particle expands when absorbing lithium ions and contracts when desorbing lithium ions. In the present embodiment, since the absorption reaction (discharge) and the desorption reaction (charge) uniformly occur, it is considered that the difference in stress caused by the expansion and contraction of the secondary particle is relaxed between the surface part and the central part. As a result, it is possible to reduce an uneven reaction while keeping the reaction resistance low in the central part of the secondary particle. Therefore, it is possible to improve the charge and discharge efficiency, for example, under a high voltage in which the upper limit voltage is set to 4.45 V.

<<Method for Measuring Aspect Ratio>>

In the present embodiment, the aspect ratio is measured by the following method.

In the measurement of the aspect ratio, a scanning ion microscopic image or a scanning electron microscopic image can be used. In the cross section of the secondary particle, the primary particles present in the same diametrical direction that passes through the centroid of the cross section of the secondary particle are observed as samples, and the observation is repeated until the numbers of the primary particles observed reached 100 or more and 200 or less in the central part and in the surface part, respectively. The ratios (x/y) of the lengths y of the maximum diameters perpendicular to the lengths x of the longest diameters of the observed samples are calculated using image analysis software, and the average value thereof is obtained.

[Difference in Average Value of Aspect Ratios of Primary Particles Between Central Part and Surface Part of Secondary Particle]

In the lithium composite metal oxide of the present embodiment, in the cross-sectional image obtained by the above-described method, the difference in the average value between the aspect ratios of the primary particles present in the central part of the secondary particle and the aspect ratios of the primary particles present in the surface part is preferably 0.30 or more, more preferably 0.32 or more, and even more preferably 0.35 or more. In addition, the upper limit is preferably 1.00 or less, more preferably 0.80 or less, and even more preferably 0.60 or less.

The upper limit and the lower limit can be a random combination.

In the present embodiment, particularly, the difference in the average value is preferably 0.30 or more and 1.00 or less, more preferably 0.32 or more and 0.80 or less, and particularly preferably 0.35 or more and 0.60 or less.

When the difference in the average value of the aspect ratios of the primary particles in the central part and in the surface part of the secondary particle is set in the above-described range, it is possible to reduce an uneven reaction while keeping the reaction resistance associated with the movement of lithium ions low.

[Average Value of Aspect Ratios of Primary Particles Present in Surface Part]

In the lithium composite metal oxide of the present embodiment, in the cross-sectional image obtained by the above-described method, the average value of the aspect ratios of the primary particles present in the surface part of the secondary particle is preferably 1.90 or more, more preferably 2.10 or more, and even more preferably 2.20 or more. In addition, the upper limit is preferably 3.00 or less, more preferably 2.50 or less, and even more preferably 2.35 or less.

The upper limit and the lower limit can be a random combination.

In the present embodiment, particularly, the average value of the aspect ratios of the primary particles present in the surface part is preferably 1.90 or more and 3.00 or less, more preferably 2.10 or more and 2.50 or less, and particularly preferably 2.20 or more and 2.35 or less.

When the average value of the aspect ratios of the primary particles in the surface part of the secondary particle is set in the above-described range, the straightness of lithium ions improves during the movement of the lithium ions, and the rate characteristics improve.

[Average Value of Aspect Ratios of Primary Particles Present in Central Part]

In the lithium composite metal oxide of the present embodiment, in the cross-sectional image obtained by the above-described method, the average value of the aspect ratios of the primary particles present in the central part of the secondary particle is preferably 1.66 or more, more preferably 1.70 or more, and even more preferably 1.72 or more. In addition, the upper limit is preferably 2.00 or less, more preferably 1.95 or less, and even more preferably 1.93 or less.

The upper limit and the lower limit can be a random combination.

In the present embodiment, particularly, the average value of the aspect ratios of the primary particles present in the central part is preferably 1.70 or more and 2.00 or less, more preferably 1.71 or more and 1.95 or less, and particularly preferably 1.72 or more and 1.93 or less.

When the average value of the aspect ratios of the primary particles present in the central part of the secondary particle is set in the above-described range, it is possible to reduce an uneven reaction in the central part of the secondary particle.

A case where the present invention is not applied and the reference primary particles having an aspect ratio of 2.0 or more are not included in predetermined proportions in the central part and in the surface part of the secondary particle will be described.

Fig. 4 illustrates a schematic view of the cross section of a secondary particle in a case where the present invention is not applied. In a secondary particle 40 illustrated in Fig. 4, when lithium ions diffuse along the grain boundaries between primary particles from the surface of the secondary particle, the lithium ions need to move in curved paths, and thus it is not easy for the lithium ions to diffuse up to the central part of the secondary particle. As a result, the absorption reaction and the desorption reaction of the lithium ions may occur only on the surface of the secondary particle. In such a case, the secondary particle expands and contracts only in the surface part due to the absorption reaction and desorption reaction, which creates a difference in stress caused by the expansion and contraction of the secondary particle between the surface part and the central part. Therefore, it is presumed that the reaction resistance in the central part of the secondary particle increases, an uneven reaction is likely to occur in the secondary particle as a whole, and the charge and discharge efficiency decreases.

[Average Value of Longest Diameters x of Primary Particles Present in Surface Part]

In the lithium composite metal oxide of the present embodiment, the average value of the longest diameters x of the primary particles present in the surface part of the secondary particle is preferably 0.32 μm or more, more preferably 0.46 μm or more, and even more preferably 0.65 μm or more. In addition, the upper limit is preferably 1.50 μm or less, more preferably 1.00 μm or less, and even more preferably 0.98 μm or less.
The upper limit and the lower limit can be a random combination.
In the present embodiment, particularly, the average value of the longest diameters x of the primary particles present in the surface part is preferably 0.32 μm or more and 1.50 μm or less, more preferably 0.46 μm or more and 1.00 μm or less, and particularly preferably 0.65 μm or more and 0.98 μm or less.
When the average value of the longest diameters x of the primary particles present in the surface part of the secondary particle is set in the above-described range, the straightness of lithium ions improves during the movement of the lithium ions, and the rate characteristics improve.

[Average Value of Maximum Diameters y Perpendicular to Longest Diameters x of Primary Particles Present in Surface Part]

In the lithium composite metal oxide of the present embodiment, the average value of the maximum diameters y perpendicular to the longest diameters x of the primary particles present in the surface part of the secondary particle is preferably 0.20 μm or more, more preferably 0.35 μm or more, and even more preferably 0.40 μm or more. In addition, the upper limit is preferably 1.00 μm or less, more preferably 0.80 μm or less, and even more preferably 0.60 μm or less.
The upper limit and the lower limit can be a random combination.
In the present embodiment, particularly, the average value of the maximum diameters y perpendicular to the longest diameters x of the primary particles present in the surface part is preferably 0.20 μm or more and 1.00 μm or less, more preferably 0.35 μm or more and 0.80 μm or less, and particularly preferably 0.40 μm or more and 0.60 μm or less.
When the average value of the longest diameters x of the primary particles present in the surface part of the secondary particle is set in the above-described range, the straightness of lithium ions improves during the movement of the lithium ions, and the rate characteristics improve.

[Average Value of Longest Diameters x of Primary Particles Present in Central Part]

In the lithium composite metal oxide of the present embodiment, the average value of the longest diameters x of the primary particles present in the central part of the secondary particle is preferably 0.32 μm or more, more preferably 0.35 μm or more, and even more preferably 0.46 μm or more. In addition, the upper limit is preferably 1.00 μm or less, more preferably 0.90 μm or less, and even more preferably 0.80 μm or less.
The upper limit and the lower limit can be a random combination.
In the present embodiment, particularly, the average value of the longest diameters x of the primary particles present in the central part is preferably 0.32 μm or more and 1.00 μm or less, more preferably 0.35 μm or more and 0.90 μm or less, and particularly preferably 0.46 μm or more and 0.80 μm or less.
When the average value of the longest diameters x of the primary particles in the surface part of the secondary particle is set in the above-described range, it is possible to reduce an uneven reaction in the central part of the secondary particle.

[Average Value of Maximum Diameters y Perpendicular to Longest Diameters x of Primary Particles Present in Central Part]

In the lithium composite metal oxide of the present embodiment, the average value of the maximum diameters y perpendicular to the longest diameters x of the primary particles present in the central part of the secondary particle is preferably 0.20 μm or more, more preferably 0.25 μm or more, and even more preferably 0.31 μm or more. In addition, the upper limit is preferably 0.60 μm or less, more preferably 0.50 μm or less, and even more preferably 0.45 μm or less.
The upper limit and the lower limit can be a random combination.
In the present embodiment, particularly, the average value of the maximum diameters y perpendicular to the longest diameters x of the primary particles present in the central part is preferably 0.20 μm or more and 0.60 μm or less, more preferably 0.25 μm or more and 0.50 μm or less, and particularly preferably 0.31 μm or more and 0.45 μm or less.

When the average value of the longest diameters x of the primary particles in the surface part of the secondary particle is set in the above-described range, it is possible to reduce an uneven reaction in the central part of the secondary particle.

[Composition Formula]

The composition formula of the lithium composite metal oxide of the present embodiment is preferably represented by Composition Formula (I).

$$Li[Li_x(Ni_{(1-y-z-w)}Co_yMn_zM_w)_{1-x}]O_2 ... \qquad (I)$$

(In Formula (I), $-0.1 \leq x \leq 0.2$, $0 \leq y \leq 0.5$, $0 \leq z \leq 0.5$, $0 \leq w \leq 0.1$, $y + z + w < 1$, M represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.)

From the viewpoint of obtaining a lithium secondary battery having high cycle characteristics, x in Formula (I) is preferably more than 0, more preferably 0.01 or more, and even more preferably 0.02 or more. In addition, from the viewpoint of obtaining a lithium secondary battery having higher initial Coulombic efficiency, x in Formula (I) is preferably less than 0.2, more preferably 0.10 or less, and even more preferably 0.06 or less.

The upper limit and the lower limit of x can be a random combination.

In the present embodiment, for example, x is preferably more than 0 and less than 0.2, more preferably 0.01 or more and 0.10 or less, and particularly preferably 0.02 or more and 0.06 or less.

In addition, from the viewpoint of obtaining a lithium secondary battery having a low battery resistance, y in Formula (I) is preferably 0.05 or more, more preferably 0.10 or more, and even more preferably 0.15 or more. y in Formula (I) is preferably 0.39 or less, more preferably 0.35 or less, and even more preferably 0.33 or less.

The upper limit and the lower limit of y can be a random combination.

In the present embodiment, for example, y is preferably 0.05 or more and 0.39 or less, more preferably 0.10 or more and 0.35 or less, and particularly preferably 0.15 or more and 0.33 or less.

In addition, from the viewpoint of obtaining a lithium secondary battery having high cycle characteristics, z in Formula (I) is preferably 0.01 or more, more preferably 0.03 or more, and particularly preferably 0.04 or more. In addition, z in Formula (I) is preferably 0.39 or less, more preferably 0.38 or less, and even more preferably 0.35 or less.

The upper limit and the lower limit of z can be a random combination.

In the present embodiment, z is preferably 0.01 or more and 0.39 or less, more preferably 0.03 or more and 0.38 or less, and particularly preferably 0.04 or more and 0.35 or less.

In addition, from the viewpoint of obtaining a lithium secondary battery having a low battery resistance, w in Formula (I) is preferably more than 0, more preferably 0.0005 or more, and even more preferably 0.001 or more. In addition, w in Formula (I) is preferably 0.09 or less, more preferably 0.08 or less, and even more preferably 0.07 or less.

The upper limit and the lower limit of w can be a random combination.

In the present embodiment, w is preferably more than 0 and 0.09 or less, more preferably 0.0005 or more and 0.08 or less, and particularly preferably 0.001 or more and 0.07 or less.

M in Formula (I) represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn.

In addition, from the viewpoint of obtaining a lithium secondary battery having high cycle characteristics, M in Formula (I) is preferably one or more elements selected from the group consisting of Ti, Mg, Al, W, B, and Zr and is preferably one or more elements selected from the group consisting of Al, W, B, and Zr.

(Layered Structure)

The crystal structure of the lithium composite metal oxide is a layered structure and more preferably a hexagonal crystal structure or a monoclinic crystal structure.

The hexagonal crystal structure belongs to any one space group selected from the group consisting of P3, $P3_1$, P32, R3, P-3, R-3, P312, P321, $P3_112$, $P3_121$, P3212, $P3_221$, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm, and $P6_3$/mmc.

In addition, the monoclinic crystal structure belongs to any one space group selected from the group consisting of P2, $P2_1$, C2, Pm, Pc, Cm, Cc, P2/m, $P2_1$/m, C2/m, P2/c, $P2_1$/c, C2/c.

Among these, from the viewpoint of obtaining a lithium secondary battery having a high discharge capacity, the crystal structure is particularly preferably a hexagonal crystal structure belonging to the space group R-3m or a monoclinic crystal structure belonging to C2/m.

As a lithium compound that is used in the present invention, it is possible to use any one of lithium carbonate, lithium nitrate, lithium sulfate, lithium acetate, lithium hydroxide, lithium oxide, lithium chloride, and lithium fluoride or a mixture of two or more thereof. Among these, any one or both of lithium hydroxide and lithium carbonate is preferable.

<Method for Manufacturing Lithium-Containing Composite Oxide>

The lithium-containing composite oxide of the present invention preferably includes a step of manufacturing a composite metal compound containing nickel, cobalt, and manganese and a step of manufacturing a lithium composite metal compound for which the composite metal compound and the lithium compound are used.

In the manufacturing of the lithium-containing composite oxide of the present invention, first, a composite metal compound containing an essential metal and one or more optional metals is prepared. The essential metal is formed of metal other than lithium, that is, Ni, Co, or Mn, and the optional metals are selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn. After that, the composite metal compound is calcined together with an appropriate lithium compound.

The composite metal compound is preferably a nickel-containing composite hydroxide or a nickel-containing composite oxide.

Hereinafter, an example of a method for manufacturing a positive electrode active material will be described by separately describing a step of manufacturing the composite metal compound and a step of manufacturing the lithium composite metal oxide.

(Step of Manufacturing Composite Metal Compound)

Generally, the composite metal compound can be manufactured by a well-known batch coprecipitation method or continuous coprecipitation method. Hereinafter, the manufacturing method will be described in detail using a composite metal hydroxide containing nickel, cobalt, and manganese as metals as an example.

First, a nickel salt solution, a cobalt salt solution, a manganese salt solution, and a complexing agent are reacted together by a coprecipitation method, particularly, the continuous method described in Japanese Unexamined Patent Application, First Publication No. 2002-201028, thereby manufacturing a nickel cobalt manganese composite metal hydroxide.

A nickel salt that is a solute of the nickel salt solution is not particularly limited, and, for example, any of nickel sulfate, nickel nitrate, nickel chloride, and nickel acetate can be used. As a cobalt salt that is a solute of the cobalt salt solution, for example, any of cobalt sulfate, cobalt nitrate, and cobalt chloride can be used. As a manganese salt that is a solute of the manganese salt solution, for example, any of manganese sulfate, manganese nitrate, and manganese chloride can be used. The above metal salts are used in proportions corresponding to the composition ratio of Formula (I). That is, the nickel salt, the cobalt salt, and the manganese salt are used in proportions of (1-y-z):y:z. In addition, as the solvent, water is used.

The complexing agent is capable of forming a complex with ions of nickel, cobalt, and manganese in an aqueous solution, and examples thereof include ammonium ion donors (ammonium sulfate, ammonium chloride, ammonium carbonate, ammonium fluoride, and the like), hydrazine, ethylenediaminetetraacetic acid, nitrilotriacetic acid, uracildiacetic acid, and glycine. The complexing agent may not be contained, and, in a case where the complexing agent is contained, the amount of the complexing agent contained in the mixed solution containing the nickel salt solution, the cobalt salt solution, the optional metal M salt solution, and the complexing agent is, for example, more than 0 and 2.0 or less in terms of the molar ratio to the sum of the numbers of moles of the metal salts.

During the precipitation, an alkali metal hydroxide (for example, sodium hydroxide or potassium hydroxide) is added, if necessary, in order to adjust the pH value of the aqueous solution.

When the complexing agent in addition to the nickel salt solution, the cobalt salt solution, and the manganese salt solution is continuously supplied to a reaction tank, nickel, cobalt, and manganese react with each other, whereby a nickel cobalt manganese composite hydroxide is manufactured.

During the reaction, the temperature of the reaction tank is controlled within a range of, for example, 25°C or higher and 80°C or lower and preferably 40°C or higher and 60°C or lower.

The pH value in the reaction tank is controlled within a range of, for example, pH 9.5 or more and pH 12.2 or less and preferably pH 9.6 or more and pH 12.0 or less when the temperature of the reaction solution is 40°C.

The $NH_3$ concentration in the reaction tank is controlled in the range of 2.0 g/L or more and 7.2 g/L or less and preferably 2.5 g/L or more and 7.0 g/L or less.

When the width of the $NH_3$ concentration is controlled in a range of 2.0 to 7.2 g/L within the above-described range while controlling the pH within the above-described range, it is possible to manufacture a composite metal oxide suitable for the manufacturing of a desired lithium composite metal oxide of the present invention.

After the above reaction, the obtained reaction precipitate is washed with water and then dried to isolate a nickel cobalt manganese hydroxide as a nickel cobalt manganese composite compound. In addition, the reaction precipitate may be washed with a weak acid water or an alkaline solution containing sodium hydroxide or potassium hydroxide as necessary.

In the above example, the nickel cobalt manganese composite hydroxide is manufactured, but a nickel cobalt manganese composite oxide may be prepared.

(Step of Manufacturing Lithium Composite Metal Oxide)

• Mixing Step

After being dried, the composite metal oxide or hydroxide is mixed with a lithium compound. The drying conditions are not particularly limited. Examples of the atmosphere include an air atmosphere, an oxygen atmosphere, a nitrogen atmosphere, and the like.

As the lithium compound, any one or two or more of lithium carbonate, lithium nitrate, lithium acetate, lithium hydroxide, lithium hydroxide hydrate, and lithium oxide can be used or two or more thereof can be mixed together and used.

After being dried, the composite metal oxide or hydroxide may be classified as appropriate. The lithium compound and the composite metal oxide or hydroxide are used in consideration of the composition ratio of the final object. For example, in a case where the nickel cobalt manganese composite hydroxide is used, the lithium compound and the composite metal hydroxide are used in proportions corresponding to the composition ratio of Formula (I).

• Main calcining Step

The mixture of the nickel cobalt manganese composite metal composite metal oxide or hydroxide and the lithium compound is calcined, whereby a lithium nickel cobalt manganese composite metal oxide is obtained. In the calcining, dry air, an oxygen atmosphere, an inert atmosphere, or the like is used depending on the desired composition, and a main calcining step having a plurality of heating steps is performed as necessary.

The calcining temperature of the composite metal oxide or hydroxide and the lithium compound such as lithium hydroxide or lithium carbonate is not particularly limited, but is preferably 600°C or higher and 1100°C or lower, more preferably 650°C or higher and 1000°C or lower, and even more preferably 700°C or higher and 950°C or lower. Here, the calcining temperature is the highest temperature of the holding temperature in the main calcining step (hereinafter, sometimes referred to as the highest holding temperature). In the case of the main calcining step having a plurality of heating steps, the calcining temperature refers to the temperature of, among the respective heating steps, the heating step in which the mixture is heated at the highest holding temperature.

The calcining time is preferably 2 hours or longer and 20 hours or shorter. When the calcining time is 20 hours or shorter, it is possible to prevent the volatilization of lithium and to prevent the deterioration of the battery performance. When the calcining time is 2 hours or longer, the development of crystals favorably proceeds, and it is possible to improve the battery performance.

In the present embodiment, the temperature rising rate in the heating step in which temperature reaches the highest holding temperature is preferably 180 °C/hr or more, more preferably 200 °C/hr or more, and particularly preferably 250 °C/hr or more.

The temperature rising rate in the heating step in which the temperature reaches the highest holding temperature is calculated from the time taken from the time when the temperature rising is started to the time when the temperature reaches the holding temperature, which will be described below, in a calcining apparatus.

• Washing Step

If necessary, the obtained calcined product is washed after calcining. For the washing, pure water or an alkaline washing solution can be used.

Examples of the alkaline washing solution include aqueous solutions of one or more anhydrides selected from the group consisting of LiOH (lithium hydroxide), NaOH (sodium hydroxide), KOH (potassium hydroxide), $Li_2CO_3$ (lithium carbonate), $Na_2CO_3$ (sodium carbonate), K2CO3 (potassium carbonate), and $(NH_4)_2CO_3$ (ammonium carbonate) and a hydrate thereof. Moreover, ammonia can also be used as an alkali.

In the washing step, as a method of bringing the washing solution and the lithium composite metal compound into contact with each other, there are a method of adding the lithium composite metal oxide to the aqueous solution of each washing solution and stirring the resultant, a method of applying the aqueous solution of each washing solution as shower water to the lithium composite metal oxide, and a method of adding the lithium composite metal oxide to the aqueous solution of each washing solution, stirring the resultant, then, separating the lithium composite metal oxide from the aqueous solution of each washing solution, and then applying the aqueous solution of each washing solution as shower water to the lithium composite metal oxide after being separated.

• Method for Manufacturing Lithium Composite Metal Oxide Having Coating Particles or Coating Layer

In the case of manufacturing a lithium composite metal oxide having coating particles or a coating layer, first, a coating raw material and the lithium composite metal compound are mixed together. Next, a heat treatment is performed as necessary, whereby a coating layer made of the coating raw material can be formed on the surfaces of the primary particles or secondary particles of the lithium composite metal compound. The coating layer has lithium ion conductivity.

The coating raw material is not particularly limited as long as the coating raw material has lithium ion conductivity. An oxide, hydroxide, carbonate, nitrate, sulfate, halide, oxalate, or alkoxide of one or more elements selected from the group consisting of aluminum, boron, titanium, zirconium, and tungsten can be used, and an oxide is preferable. As the coating raw material, aluminum oxide, aluminum hydroxide, aluminum sulfate, aluminum chloride, aluminum alkoxide, boron oxide, boric acid, titanium oxide, titanium chloride, titanium alkoxide, zirconium oxide, tungsten oxide, tungstic acid, and the like can be adopted, and aluminum oxide, aluminum hydroxide, boron oxide, boric acid, zirconium oxide, and tungsten oxide are preferable.

In order to more efficiently coat the surface of the lithium composite metal oxide with the coating raw material, the coating raw material is preferably fine particles compared with the secondary particles in the lithium composite metal oxide. Specifically, the average secondary particle diameter of the coating raw material is preferably 1 $\mu$m or less, and more preferably 0.1 $\mu$m or less.

The lower limit of the average secondary particle diameter of the coating raw material is preferably as small as possible and is, for example, 0.001 $\mu$m. The average secondary particle diameter of the coating raw material can be measured by the same method as the average secondary particle diameter of a lithium-containing transition metal composite oxide.

The mixing of the coating raw material and the lithium composite metal oxide may be performed in the same manner as the mixing during the manufacturing of the lithium composite metal oxide. Preferable is a method of mixing the coating raw material and the lithium composite metal oxide using a mixing apparatus that does not include mixing media such as balls and does not involve strong pulverization, such as a method of mixing the coating raw material and the lithium composite metal oxide using a powder mixer equipped with a stirring blade inside. Furthermore, the coating layer can be more firmly attached to the surface of the lithium composite metal oxide by holding the coating raw material and the lithium composite metal oxide in an atmosphere containing water after mixing.

The heat treatment conditions (the temperature and the holding time) in the heat treatment performed as necessary after the mixing of the coating raw material and the lithium composite metal oxide may vary depending on the kind of the coating raw material. The heat treatment temperature is preferably set to be in a range of 300°C or higher and 850°C or lower, but is preferably a temperature equal to or lower than the calcining temperature of the lithium composite metal oxide. When the temperature is higher than the calcining temperature of the lithium composite metal oxide, there are cases where the coating raw material forms a solid solution with the lithium composite metal oxide and the coating layer is not formed. The holding time in the heat treatment is preferably set to be shorter than the holding time at the time of calcining. As an atmosphere in the heat treatment, the same atmosphere gas as that in the calcining can be adopted.

The lithium composite metal oxide having a coating layer can also be obtained by forming the coating layer on the surface of the lithium composite metal oxide using a technique such as sputtering, CVD, or vapor deposition.

Moreover, there are cases where the lithium composite metal oxide having a coating layer is obtained by mixing and calcining the composite metal oxide or hydroxide, the lithium compound, and the coating raw material.

The lithium composite metal oxide having coating layers on the surfaces of the primary particles or secondary particles of the lithium composite metal oxide is appropriately crushed and classified and is then regarded as a lithium composite metal oxide.

<Positive Electrode Active Material for Lithium Secondary Battery>

The present embodiment is a positive electrode active material for a lithium secondary battery having the lithium composite metal oxide of the present embodiment.

<Lithium Secondary Battery>

Next, a positive electrode for which a positive electrode active material for a lithium secondary battery of the present invention is used as a positive electrode active material for a lithium secondary battery, and a lithium secondary battery having this positive electrode will be described while describing the configuration of a lithium secondary battery.

An example of the lithium secondary battery of the present embodiment includes a positive electrode, a negative electrode, a separator interposed between the positive electrode and the negative electrode, and an electrolytic solution disposed between the positive electrode and the negative electrode.

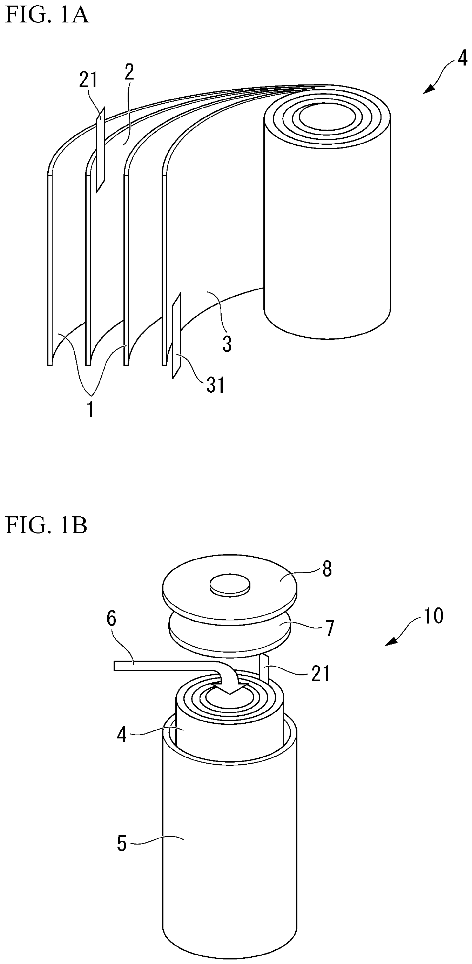

Fig. 1A and Fig. 1B are schematic views illustrating an example of the lithium secondary battery of the present embodiment. A cylindrical lithium secondary battery 10 of the present embodiment is manufactured as follows.

First, as illustrated in Fig. 1A, a pair of separators 1 having a strip shape, a strip-shaped positive electrode 2 having a positive electrode lead 21 at one end, and a strip-shaped negative electrode 3 having a negative electrode lead 31 at one end are stacked in order of the separator 1, the positive electrode 2, the separator 1, and the negative electrode 3 and are wound to form an electrode group 4.

Next, as shown in Fig. 1B, the electrode group 4 and an insulator (not illustrated) are accommodated in a battery can 5, and then the can bottom is sealed. The electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be manufactured.

The shape of the electrode group 4 is, for example, a columnar shape such that the cross-sectional shape becomes a circle, an ellipse, a rectangle, or a rectangle with rounded corners when the electrode group 4 is cut in a direction perpendicular to the winding axis.

In addition, as the shape of a lithium secondary battery having the electrode group 4, a shape defined by IEC60086, which is a standard for batteries defined by the International Electrotechnical Commission (IEC), or by JIS C 8500 can be adopted. For example, shapes such as a cylindrical shape and a square shape can be adopted.

Furthermore, the lithium secondary battery is not limited to the wound type configuration, and may have a stacked type configuration in which a stacked structure of a positive electrode, a separator, a negative electrode, and a separator is repeatedly stacked. The stacked type lithium secondary battery can be exemplified by a so-called coin type battery, a button type battery, and a paper type (or sheet type) battery.

Hereinafter, each configuration will be described in order.

(Positive Electrode)

A positive electrode of the present embodiment can be manufactured by first adjusting a positive electrode mixture containing a positive electrode active material, a conductive material, and a binder, and causing a positive electrode current collector to hold the positive electrode mixture.

(Conductive Material)

A carbon material can be used as the conductive material included in the positive electrode of the present embodiment. As the carbon material, there are graphite powder, carbon black (for example, acetylene black), a fibrous carbon material, and the like. Since carbon black is fine particles and has a large surface area, the addition of a small amount of carbon black to the positive electrode mixture increases the conductivity inside the positive electrode and thus improves the charge and discharge efficiency and output characteristics. However, when the carbon black is added too much, both the binding force between the positive electrode mixture and the positive electrode current collector and the binding force inside the positive electrode mixture by the binder decrease, which causes an increase in internal resistance.

The proportion of the conductive material in the positive electrode mixture is preferably 5 parts by mass or more and 20 parts by mass or less with respect to 100 parts by mass of the positive electrode active material. In the case of using a fibrous carbon material such as graphitized carbon fiber or carbon nanotube as the conductive material, the proportions can be reduced.

(Binder)

A thermoplastic resin can be used as the binder included in the positive electrode of the present embodiment. As the thermoplastic resin, fluorine resins such as polyvinylidene fluoride (hereinafter, sometimes indicated as PVdF), polytetrafluoroethylene (hereinafter, sometimes indicated as PTFE), tetrafluoroethylene-hexafluoropropylene-vinylidene fluoride copolymers, hexafluoropropylene-vinylidene fluoride copolymers, and tetrafluoroethylene-perfluorovinyl ether copolymers; and polyolefin resins such as polyethylene and polypropylene can be adopted.

These thermoplastic resins may be used as a mixture of two or more. By using a fluorine resin and a polyolefin resin as the binder and setting the proportion of the fluorine resin in the entire positive electrode mixture to 1 mass% or more and 10 mass% or less and the proportions of the polyolefin resin in 0.1 mass% or more and 2 mass% or less, a positive electrode mixture having both high adhesion to the positive electrode current collector and high bonding strength in the positive electrode mixture can be obtained.

(Positive Electrode Current Collector)

As the positive electrode current collector included in the positive electrode of the present embodiment, a strip-shaped member formed of a metal material such as Al, Ni, or stainless steel as the forming material can be used. Among these, from the viewpoint of easy processing and low cost, it is preferable to use Al as the forming material and process Al into a thin film.

As a method of causing the positive electrode current collector to hold the positive electrode mixture, a method of press-forming the positive electrode mixture on the positive electrode current collector can be adopted. In addition, the positive electrode mixture may be held by the positive electrode current collector by forming the positive electrode mixture into a paste using an organic solvent, applying the paste of the positive electrode mixture to at least one side of the positive electrode current collector, drying the paste, and pressing the paste to be fixed.

In the case of forming the positive electrode mixture into a paste, as the organic solvent which can be used, amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and N-methyl-2-pyrrolidone (hereinafter, sometimes indicated as NMP) can be adopted.

Examples of a method of applying the paste of the positive electrode mixture to the positive electrode current collector include a slit die coating method, a screen coating method, a curtain coating method, a knife coating method, a gravure coating method, and an electrostatic spraying method.

The positive electrode can be manufactured by the method described above.

(Negative Electrode)

The negative electrode included in the lithium secondary battery of the present embodiment may be capable of being doped with or dedoped from lithium ions at a potential lower than that of the positive electrode, and an electrode in which a negative electrode mixture containing a negative electrode active material is held by a negative electrode current collector, and an electrode formed of a negative electrode active material alone can be adopted.

(Negative Electrode Active Material)

As the negative electrode active material included in the negative electrode, materials that can be doped with or dedoped from lithium ions at a potential lower than that of the positive electrode, such as carbon materials, chalcogen compounds (oxides, sulfides, and the like), nitrides, metals, and alloys can be adopted.

As the carbon materials that can be used as the negative electrode active material, graphite such as natural graphite and artificial graphite, cokes, carbon black, pyrolytic carbons, carbon fibers, and an organic polymer compound calcined body can be adopted.

As the oxides that can be used as the negative electrode active material, oxides of silicon expressed by the formula $SiO_x$ (where, x is a positive real number) such as $SiO_2$ and $SiO$; oxides of titanium expressed by the formula $TiO_x$ (where x is a positive real number) such as $TiO_2$ and $TiO$; oxides of vanadium expressed by the formula $VO_x$ (where x is a positive real number) such as $V_2O_5$ and $VO2$; oxides of iron expressed by the formula $FeO_x$ (where x is a positive real number) such as $Fe_3O_4$, $Fe_2O_3$, and $FeO$; oxides of tin expressed by the formula $SnO_x$ (where x is a positive real number) such as $SnO_2$ and $SnO$; oxides of tungsten expressed by a general formula $WO_x$ (where, x is a positive real number) such as $WO3$ and $WO_2$; and composite metal oxides containing lithium and titanium or vanadium such as $Li_4Ti_5O_{12}$ and $LiVO_2$ can be adopted.

As the sulfides that can be used as the negative electrode active material, sulfides of titanium expressed by the formula $TiS_x$ (where, x is a positive real number) such as $Ti2S3$, $TiS2$, and $TiS$; sulfides of vanadium expressed by the formula $VS_x$ (where x is a positive real number) such $V3S4$, $VS2$, and $VS$; sulfides of iron expressed by the formula $FeS_x$ (where x is a positive real number) such as $Fe3S4$, $FeS2$, and $FeS$; sulfides of molybdenum expressed by the formula $MoS_x$ (where x is a positive real number) such as $Mo_2S_3$ and $MoS2$; sulfides of tin expressed by the formula $SnS_x$ (where x is a positive real number) such as $SnS2$ and $SnS$; sulfides of tungsten expressed by $WS_x$ (where x is a positive real number) such as $WS2$; sulfides of antimony expressed by the formula $SbS_x$ (where x is a positive real number) such as $Sb2S3$; and sulfides of selenium expressed by the formula $SeS_x$ (where x is a positive real number) such as $SesS3$, $SeS2$, and $SeS$ can be adopted.

As the nitrides that can be used as the negative electrode active material, lithium-containing nitrides such as $Li_3N$ and $Li_{3-x}A_xN$ (where A is either one or both of Ni and Co, and $0 < x < 3$ is satisfied.) can be adopted.

These carbon materials, oxides, sulfides, and nitrides may be used singly or in combination of two or more. In addition, these carbon materials, oxides, sulfides, and nitrides may be either crystalline or amorphous.

Moreover, as the metals that can be used as the negative electrode active material, lithium metal, silicon metal, tin metal, and the like can be adopted.

As the alloys that can be used as the negative electrode active material, lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as Cu2Sb and $La_3Ni_2Sn_7$ can be adopted.

These metals and alloys are mainly used alone as an electrode after being processed into, for example, a foil shape.

Among the above-described negative electrode active materials, the carbon material containing graphite such as natural graphite or artificial graphite as a main component is preferably used because the potential of the negative electrode hardly changes from the uncharged state to the fully-charged state during charging (the potential flatness is favorable), the average discharge potential is low, the capacity retention ratio during repeated charging and discharging is high (the cycle characteristics are favorable), and the like. The shape of the carbon material may be, for example, a flaky shape such as natural graphite, a spherical shape such as mesocarbon microbeads, a fibrous shape such as graphitized carbon fiber, or an aggregate of fine powder.

The negative electrode mixture described above may contain a binder as necessary. As the binder, a thermoplastic resin can be adopted, and specifically, PVdF, thermoplastic polyimide, carboxymethylcellulose, polyethylene, and polypropylene can be adopted.

(Negative Electrode Current Collector)

As the negative electrode current collector included in the negative electrode, a strip-shaped member formed of a metal material, such as Cu, Ni, and stainless steel, as the forming material can be adopted. Among these, it is preferable to use Cu as the forming material and process Cu into a thin film because Cu is less likely to form an alloy with lithium and can be easily processed.

As a method of causing the negative electrode current collector to hold the negative electrode mixture, similarly to the case of the positive electrode, a method using press-forming, or a method of forming the negative electrode mixture into a paste using a solvent or the like, applying the paste onto the negative electrode current collector, drying the paste, and pressing the paste to be compressed can be adopted.

(Separator)

As the separator included in the lithium secondary battery of the present embodiment, for example, a material having a form such as a porous film, non-woven fabric, or woven fabric made of a material such as a polyolefin resin such as polyethylene and polypropylene, a fluorine resin, and a nitrogen-containing aromatic polymer can be used. In addition, two or more of these materials may be used to form the separator, or these materials may be stacked to form the separator.

In the present embodiment, the air resistance of the separator according to the Gurley method defined by JIS P 8117 is preferably 50 sec/100 cc or more and 300 sec/100 cc or less, and more preferably 50 sec/100 cc or more and 200 sec/100 cc or less in order for the electrolyte to favorably permeate therethrough during battery use (during charging and discharging).

In addition, the porosity of the separator is preferably 30 vol% or more and 80 vol% or less, and more preferably 40 vol% or more and 70 vol% or less. The separator may be a laminate of separators having different porosities.

(Electrolytic Solution)

The electrolytic solution included in the lithium secondary battery of the present embodiment contains an electrolyte and an organic solvent.

As the electrolyte contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, Li-BOB (here, BOB refers to bis(oxalato)borate), LiFSI (here, FSI refers to bis(fluorosulfonyl)imide), lower aliphatic carboxylic acid lithium salts, and $LiAlCl_4$ can be adopted, and a mixture of two or more of these may be used. Among these, as the electrolyte, it is preferable to use at least one selected from the group consisting of LiPF6, LiAsF6, LiSbF6, LiBF4, $LiCF_3SO_3$, $LiN(SO_2CF_3)_2$, and $LiC(SO_2CF_3)_3$, which contain fluorine.

As the organic solvent included in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and γ-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by introducing a fluoro group into these organic solvents (those in which one or more of the hydrogen atoms of the organic solvent are substituted with a fluorine atom) can be used.

As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has many features such as a wide operating temperature range, being less likely to deteriorate even when charged and discharged at a high current rate, being less likely to deteriorate even during a long-term use, and being non-degradable even in a case where a graphite material such as natural graphite or artificial graphite is used as the negative electrode active material.

Furthermore, as the electrolytic solution, it is preferable to use an electrolytic solution containing a lithium salt containing fluorine such as LiPF6 and an organic solvent having a fluorine substituent in order to enhance the safety of the obtained lithium secondary battery. A mixed solvent containing ethers having a fluorine substituent, such as pentafluoropropyl methyl ether and 2,2,3,3-tetrafluoropropyl difluoromethyl ether and dimethyl carbonate is even more preferable because the capacity retention ratio is high even when charging or discharging is performed at a high current rate.

A solid electrolyte may be used instead of the electrolytic solution. As the solid electrolyte, for example, an organic polymer electrolyte such as a polyethylene oxide-based polymer compound, or a polymer compound containing at least one or more of a polyorganosiloxane chain or a polyoxyalkylene chain can be used. A so-called gel type in which a non-aqueous electrolytic solution is held in a polymer compound can also be used. Inorganic solid electrolytes containing sulfides such as Li2S-SiS2, Li2S-GeS2, $Li_2S$-$P_2S_5$, $Li_2S$-$B_2S_3$, $Li_2S$-$SiS_2$-$Li_3PO_4$, $Li_2S$-$SiS_2$-$Li_2SO_4$, and $Li_2S$-$GeS_2$-$P_2S_5$ can be adopted, and a mixture or two or more thereof may be used. By using these solid electrolytes, the safety of the lithium secondary battery may be further enhanced.

In addition, in the case of using a solid electrolyte in the lithium secondary battery of the present embodiment, there may be cases where the solid electrolyte plays a role of the separator, and in such a case, the separator may not be required.

Since the positive electrode active material having the above-described configuration is manufactured using the lithium-containing composite metal oxide of the present embodiment described above, it is possible to improve the charge and discharge efficiency of the lithium secondary battery for which the positive electrode active material is used under a high voltage in which the upper limit voltage is set to 4.45 V.

In addition, since the positive electrode having the above-described configuration has the positive electrode active material for a lithium secondary battery of the present embodiment described above, it is possible to improve the charge and discharge efficiency under a high voltage in which the upper limit voltage of the lithium secondary battery is set to 4.45 V.

Furthermore, since the lithium secondary battery having the above-described configuration has the above-described positive electrode, the secondary battery has a higher charge and discharge efficiency under a high voltage in which the upper limit voltage is set to 4.45 V than in the related art.

[Examples]

Next, the present invention will be described in more detail with reference to examples.

In the present examples, lithium composite metal oxides were evaluated as described below.

<Observation of Cross Section of Lithium Composite Metal Oxide>

The powder of the lithium composite metal oxide was processed with a focused ion beam processing apparatus (FB2200 manufactured by Hitachi High-Tech Corporation) to produce a cross section that passed through substantially the center of a secondary particle, and the cross section of the lithium composite metal oxide was observed with the focused ion beam processing apparatus as a scanning ion microscopic image (SIM image) or observed with a scanning electron microscope (S-4800 manufactured by Hitachi High-Tech Corporation) as a scanning electron microscopic image (SEM image). Alternatively, a positive electrode was processed with an ion milling apparatus (IM4000 manufactured by Hitachi High-Tech Corporation) to prepare a cross section, and the cross section of the lithium composite metal oxide was observed with a scanning electron microscope as a SEM image. A lithium composite metal oxide having a maximum diameter of the 50% cumulative volume particle size D50 ($\mu$m) $\pm$ 5% was selected, and an image thereof was captured at a maximum magnification at which the particle of the lithium composite metal oxide was fitted into the framework. The 50% cumulative volume particle size D50 was obtained by laser diffraction-type particle size distribution measurement.

<Method for Measuring Aspect Ratio of Primary Particle>

In the measurement of aspect ratios, a scanning electron microscopic image was used. Primary particles were observed as samples. The ratios (x/y) of the lengths y of the maximum diameters perpendicular to the lengths x of the longest diameters of the observed samples were calculated, and the average value thereof was obtained.

[Method for Measuring Content Proportion of Reference Primary Particles Having Aspect Ratio of 2.0 or More]

When a figure surrounded by the outer edge of the cross section of the secondary particle was regarded to have an area of S, an imaginary circle that had the center at the centroid position of the figure and had a radius of r was assumed, a portion surrounded by the imaginary circle was regarded as the central part, and a portion obtained by removing the central part from the figure was regarded as the surface part. The radius r was calculated from the following expression.

$$r = (S/\pi)^{0.5}/2$$

The content proportion of reference primary particles having an aspect ratio of 2.0 or more in the central part of the secondary particle in the cross section was calculated as described below.

Content proportion (%) of reference primary particles having aspect ratio of 2.0 or more in central part of secondary particle in cross section

$$= X1/X2 \times 100$$

X1 and X2 represent the following numbers.
X1: Number of reference primary particles having aspect ratio of 2.0 or more among primary particles having centroid present in central part of secondary particle
X2: Number of primary particles having centroid present in central part of secondary particle

The content proportion of reference primary particles having an aspect ratio of 2.0 or more in the surface part of the secondary particle in the cross section was calculated as described below.

Content proportion (%) of reference primary particles having aspect ratio of 2.0 or more in surface part of secondary particle in cross section

$$= Y1/Y2 \times 100$$

Y1 and Y2 represent the following numbers.
Y1: Number of reference primary particles having aspect ratio of 2.0 or more among primary particles having centroid present in surface part of secondary particle
Y2: Number of primary particles having centroid present in surface part of secondary particle

[Method for Measuring Difference in Average Value of Aspect Ratios of Primary Particles between Central Part and Surface Part of Secondary Particle]

The difference in the average value of the aspect ratios of the primary particles between the central part and the surface part of the secondary particle was calculated as described below.

Difference in average value of aspect ratios of primary particles between central part and surface part of secondary particle

$$= Z1 - Z2$$

Z1 and Z2 represent the following numbers.
Z1: Average value of aspect ratios of primary particles having centroid present in surface part of secondary particle
Z2: Average value of aspect ratios of primary particles having centroid present in central part of secondary particle

[Method for Measuring Average Value of Aspect Ratios of Primary Particles in Central Part of Secondary Particle]

The average value of the aspect ratios of the primary particles in the central part of the secondary particle was calculated as described below.

Average value of aspect ratios of primary particles in central part of secondary

particle

$$= W1/W2$$

W1 and W2 represent the following numbers.
W1: Sum of aspect ratios of primary particles having centroid in central part of secondary particle
W2: Number of primary particles having centroid in central part of primary particle

[Method for Measuring Average Value of Aspect Ratios of Primary Particles in Surface Part of Secondary Particle]

The average value of the aspect ratios of the primary particles in the surface part of the secondary particle was calculated as described below.

Average value of aspect ratios of primary particles in surface part of secondary

particle

$$= J1/J2$$

J1 and J2 represent the following numbers.
J1: Sum of aspect ratios of primary particles having centroid present in surface part of secondary particle
J2: Number of primary particles having centroid present in surface part of secondary particle

<Production of Positive Electrode for Lithium Secondary Battery>

A paste-like positive electrode mixture was prepared by using the lithium composite metal oxide obtained by a manufacturing method described below as a positive electrode active material, adding the positive electrode active material, a conductive material (acetylene black), and a binder (PVdF) to achieve a composition of positive electrode active material for a lithium secondary battery:conductive material:binder = 92:5:3 (mass ratio), and performing kneading thereon. During the preparation of the positive electrode mixture, N-methyl-2-pyrrolidone was used as an organic solvent.
The obtained positive electrode mixture was applied to a 40 $\mu$m-thick Al foil that was to serve as a current collector and dried in a vacuum at 150°C for 8 hours to obtain a positive electrode for a lithium secondary battery. The electrode area of the positive electrode for a lithium secondary battery was set to 1.65 cm$^2$.

<Production of Lithium Secondary Battery (Coin Type Half Cell)>

The following operation was performed in a glove box under an argon atmosphere.
The positive electrode for a lithium secondary battery produced in the section <Production of Positive Electrode for Lithium Secondary Battery> was placed on the lower lid of a part for a coin type battery R2032 (manufactured by Hohsen Corp.) with the aluminum foil surface facing downward, and a laminated film separator (a heat-resistant porous layer (thickness 16 μm) laminated on a polyethylene porous film) was placed on the positive electrode. 300 μl of an electrolytic solution was injected thereinto. The electrolytic solution used was prepared by dissolving LiPF6 in a mixed solution of ethylene carbonate, dimethyl carbonate, and ethyl methyl carbonate in a volume ratio of 30:35:35 to a concentration of 1.0 mol/l.

Next, lithium metal was used as the negative electrode, and the negative electrode was placed on the upper side of the laminated film separator. The upper lid was closed through a gasket, and the components were caulked using a caulking machine, thereby producing a lithium secondary battery (coin type half cell R2032; hereinafter, referred to as the "half cell" in some cases).

• Charge and Discharge Test

A charge and discharge test was performed using the half cell produced by the above-described method under conditions described below, and the initial charge and discharge capacity was calculated.

<Charge and Discharge Test>

Test temperature: 25°C
Charging maximum voltage: 4.45 V, charging time: 6 hours, charging current: 0.2 CA, constant current constant voltage charging
Discharging minimum voltage: 2.5 V, discharging time: 5 hours, discharging current: 0.2 CA, constant current discharging

<Calculation of Charge and Discharge Efficiency>

The volume capacity density was obtained from the charge capacity and the discharge capacity during charging and discharging performed under the above-described conditions based on the following calculation expression.

$$\text{Initial charge and discharge efficiency (\%)} = \text{initial discharge capacity (mAh/g)/initial charge capacity (mAh/g)} \times 100$$

(Example 1)

Manufacturing of Positive Electrode Active Material 1 for Lithium Secondary Battery

[Step of Manufacturing Nickel Cobalt Manganese Composite Hydroxide]

After water was poured into a reaction tank equipped with a stirrer and an overflow pipe, an aqueous solution of sodium hydroxide was added thereto, and the liquid temperature was maintained at 65°C.

An aqueous solution of nickel sulfate and an aqueous solution of cobalt sulfate were mixed such that the atomic ratio between nickel atoms and cobalt atoms reached 0.90:0.10, whereby a mixed raw material solution was prepared.

Next, this mixed raw material solution and an aqueous solution of ammonium sulfate as a complexing agent were continuously added to a reaction tank having a volume of 15 L under stirring, and nitrogen gas mixed with air was continuously aerated. An aqueous solution of sodium hydroxide was timely added dropwise such that the pH of the solution in the reaction tank reached 11.65 when measured at 40°C, an aqueous solution of ammonium sulfate was continuously added such that the NH3 concentration in the reaction tank reached 7.0 g/L, and the components were continuously stirred at 1500 rpm, thereby obtaining nickel cobalt composite hydroxide particles. The nickel cobalt composite hydroxide particles were washed with a sodium hydroxide solution, dehydrated, isolated, and dried at 105°C, thereby obtaining a nickel cobalt composite hydroxide 1.

[Mixing Step]

The nickel cobalt composite hydroxide 1 obtained as described above and lithium hydroxide powder were weighed such that Li/(Ni + Co) reached 1.07 and mixed together.

[Calcining Step]

After that, the mixture obtained in the mixing step was calcined in an oxygen atmosphere at 720°C for 6 hours to obtain a positive electrode active material 1 for a lithium secondary battery.

Evaluation of Positive Electrode Active Material 1 for Lithium Secondary Battery

Compositional analysis of the obtained positive electrode active material 1 for a lithium secondary battery was performed, the composition was matched to Composition Formula (I), and it was found that x = 0.053, y = 0.101, z = 0, and w = 0.

The results of the content proportion of the reference primary particles in each of the surface part and the central part of the secondary particle in the positive electrode active material 1 for a lithium secondary battery, the difference between the average value of the aspect ratios of the primary particles present in the surface part of the secondary particle and the average value of the aspect ratios of the primary particles present in the central part, the average value of the aspect ratios of the primary particles present in the surface part of the secondary particle, the average value of the aspect ratios of the primary particles present in the central part of the secondary particle, the average value of the longest diameters x of the primary particles present in the surface part, the average value of the maximum diameters y perpendicular to the longest diameters x of the primary particles present in the surface part, the average value of the longest diameters x of the primary particles present in the central part, the average value of the maximum diameters y perpendicular to the longest diameters x of the primary particles present in the central part, and the initial charge and discharge efficiency of the cross section of the secondary particle under a high voltage in which the upper limit voltage is set to 4.45 V are shown in Table 1.

(Example 2)

Manufacturing of Positive Electrode Active Material 2 for Lithium Secondary Battery

[Step of Manufacturing Nickel Cobalt Manganese Composite Hydroxide]

After water was poured into a reaction tank equipped with a stirrer and an overflow pipe, an aqueous solution of sodium hydroxide was added thereto, and the liquid temperature was maintained at 65°C.

An aqueous solution of nickel sulfate and an aqueous solution of cobalt sulfate were mixed such that the atomic ratio between nickel atoms and cobalt atoms reached 0.90:0.10, whereby a mixed raw material solution was prepared.

Next, this mixed raw material solution and an aqueous solution of ammonium sulfate as a complexing agent were continuously added to a reaction tank having a volume of 15 L under stirring, and nitrogen gas mixed with air was continuously aerated. An aqueous solution of sodium hydroxide was timely added dropwise such that the pH of the solution in the reaction tank reached 11.31 when measured at 40°C, an aqueous solution of ammonium sulfate was continuously added such that the NH3 concentration in the reaction tank reached 3.2 g/L, and the components were continuously stirred at 1500 rpm, thereby obtaining nickel cobalt composite hydroxide particles. The nickel cobalt composite hydroxide particles were washed with a sodium hydroxide solution, dehydrated, isolated, and dried at 105°C, thereby obtaining a nickel cobalt composite hydroxide 2.

[Mixing Step]

The nickel cobalt composite hydroxide 2 obtained as described above and lithium hydroxide powder were weighed such that Li/(Ni + Co) reached 1.07 and mixed together.

[Calcining Step]

After that, the mixture obtained in the mixing step was calcined in an oxygen atmosphere at 720°C for 6 hours to obtain a positive electrode active material 2 for a lithium secondary battery.

Evaluation of Positive Electrode Active Material 2 for Lithium Secondary Battery

Compositional analysis of the obtained positive electrode active material 2 for a lithium secondary battery was performed, the composition was matched to Composition Formula (I), and it was found that x = 0.055, y = 0.099, z = 0, and w = 0.

The results of the content proportion of the reference primary particles in each of the surface part and the central part of the secondary particle in the positive electrode active material 2 for a lithium secondary battery, the difference between the average value of the aspect ratios of the primary particles present in the surface part of the secondary particle and the average value of the aspect ratios of the primary particles present in the central part, the average value of the aspect ratios of the primary particles present in the surface part of the secondary particle, the average value of the aspect ratios of the primary particles present in the central part of the secondary particle, the average value of the longest diameters x of the primary particles present in the surface part, the average value of the maximum diameters y perpendicular to the longest diameters x of the primary particles present in the surface part, the average value of the longest diameters x of the primary particles present in the central part, the average value of the maximum diameters y perpendicular to the longest diameters x of the primary particles present in the central part, and the initial charge and discharge efficiency of the cross section of the secondary particle under a high voltage in which the upper limit voltage is set to 4.45 V are shown in Table 1.

(Example 3)

Manufacturing of Positive Electrode Active Material 3 for Lithium Secondary Battery

[Step of Manufacturing Nickel Cobalt Manganese Aluminum Composite Hydroxide]

After water was poured into a reaction tank equipped with a stirrer and an overflow pipe, an aqueous solution of sodium hydroxide was added thereto, and the liquid temperature was maintained at 55°C.

An aqueous solution of nickel sulfate, an aqueous solution of cobalt sulfate, and an aqueous solution of manganese sulfate were mixed so that the atomic ratio of nickel atoms, cobalt atoms, and manganese atoms became 0.90:0.07:0.02, whereby a mixed raw material solution was prepared.

Next, this mixed raw material solution, an aqueous solution of aluminum sulfate, and an aqueous solution of ammonium sulfate as a complexing agent were continuously added to a reaction tank having a volume of 500 L under stirring, and nitrogen gas was continuously aerated. The aqueous solution of aluminum sulfate was added at an adjusted flow rate such that the atomic ratio of nickel atoms, cobalt atoms, manganese atoms, and aluminum atoms reached 0.90:0.07:0.02:0.01. An aqueous solution of sodium hydroxide was timely added dropwise such that the pH of the solution in the reaction tank reached 11.65 when measured at 40°C, an aqueous solution of ammonium sulfate was continuously added such that the NH3 concentration in the reaction tank reached 7.2 g/L, and the components were continuously stirred at 750 rpm, thereby obtaining nickel cobalt manganese aluminum composite hydroxide particles. The nickel cobalt manganese aluminum composite hydroxide particles were washed with a sodium hydroxide solution, dehydrated and isolated with a centrifugal separator, and dried at 105°C, thereby obtaining a nickel cobalt manganese aluminum composite hydroxide 3.

[Mixing Step]

The nickel cobalt manganese aluminum composite hydroxide 3 obtained as described above and lithium hydroxide powder were weighed such that Li/(Ni + Co + Mn + Al) reached 1.00 and mixed together.

[Calcining Step]

After that, the mixture obtained in the mixing step was held in an oxygen atmosphere at 600°C for 5 hours and was then calcined at 750°C for 10 hours by increasing the temperature. Whereby a positive electrode active material 3 for a lithium secondary battery was obtained.

Evaluation of Positive Electrode Active Material 3 for Lithium Secondary Battery

Compositional analysis of the obtained positive electrode active material 3 for a lithium secondary battery was performed, the composition was matched to Composition Formula (I), and it was found that x = 0.010, y = 0.071, z = 0.021, and w = 0.009.

The results of the content proportion of the reference primary particles in each of the surface part and the central part of the secondary particle in the positive electrode active material 3 for a lithium secondary battery, the difference between the average value of the aspect ratios of the primary particles present in the surface part of the secondary particle and the average value of the aspect ratios of the primary particles present in the central part, the average value of the aspect ratios of the primary particles present in the surface part of the secondary particle, the average value of the aspect ratios of the primary particles present in the central part of the secondary particle, the average value of the longest diameters x of the primary particles present in the surface part, the average value of the maximum diameters y perpendicular to the longest diameters x of the primary particles present in the surface part, the average value of the longest diameters x of the primary particles present in the central part, the average value of the maximum diameters y perpendicular to the longest diameters x of the primary particles present in the central part, and the initial charge and discharge efficiency of the cross section of the secondary particle under a high voltage in which the upper limit voltage is set to 4.45 V are shown in Table 1.

(Example 4)

Manufacturing of Positive Electrode Active Material 4 for Lithium Secondary Battery

[Step of Manufacturing Nickel Cobalt Manganese Aluminum Composite Hydroxide]

After water was poured into a reaction tank equipped with a stirrer and an overflow pipe, an aqueous solution of sodium hydroxide was added thereto, and the liquid temperature was maintained at 60°C.
An aqueous solution of nickel sulfate, an aqueous solution of cobalt sulfate, and an aqueous solution of manganese sulfate were mixed so that the atomic ratio of nickel atoms, cobalt atoms, and manganese atoms became 0.855:0.095:0.02, whereby a mixed raw material solution was prepared.
Next, this mixed raw material solution, an aqueous solution of aluminum sulfate, and an aqueous solution of ammonium sulfate as a complexing agent were continuously added to a reaction tank having a volume of 500 L under stirring, and nitrogen gas mixed with air was continuously aerated. The aqueous solution of aluminum sulfate was added at an adjusted flow rate such that the atomic ratio of nickel atoms, cobalt atoms, manganese atoms, and aluminum atoms reached 0.855:0.095:0.02:0.03. An aqueous solution of sodium hydroxide was timely added dropwise such that the pH of the solution in the reaction tank reached 12.12 when measured at 40°C, an aqueous solution of ammonium sulfate was continuously added such that the NH3 concentration in the reaction tank reached 6.5 g/L, and the components were continuously stirred at 750 rpm, thereby obtaining nickel cobalt manganese aluminum composite hydroxide particles. The nickel cobalt manganese aluminum composite hydroxide particles were washed with a sodium hydroxide solution, dehydrated and isolated with a centrifugal separator, and dried at 105°C, thereby obtaining a nickel cobalt manganese aluminum composite hydroxide 4.

[Mixing Step]

The nickel cobalt manganese aluminum composite hydroxide 4 obtained as described above and lithium hydroxide powder were weighed such that Li/(Ni + Co + Mn + Al) reached 1.00 and mixed together.

[Calcining Step]

After that, the mixture obtained in the mixing step was calcined in an oxygen atmosphere at 770°C for 5 hours to obtain a positive electrode active material 4 for a lithium secondary battery.

Evaluation of Positive Electrode Active Material 4 for Lithium Secondary Battery

Compositional analysis of the obtained positive electrode active material 4 for a lithium secondary battery was performed, the composition was matched to Composition Formula (I), and it was found that x = -0.011, y = 0.094, z = 0.02, and w = 0.028.
The results of the content proportion of the reference primary particles in each of the surface part and the central part of the secondary particle in the positive electrode active material 4 for a lithium secondary battery, the difference between the average value of the aspect ratios of the primary particles present in the surface part of the secondary particle and the average value of the aspect ratios of the primary particles present in the central part, the average value of the aspect ratios of the primary particles present in the surface part of the secondary particle, the average value of the aspect ratios of the primary particles present in the central part of the secondary particle, the average value of the longest diameters x of the primary particles present in the surface part, the average value of the maximum diameters y perpendicular to the longest diameters x of the primary particles present in the surface part, the average value of the longest diameters x of the primary particles present in the central part, the average value of the maximum diameters y perpendicular to the longest diameters x of the primary particles present in the central part, and the initial charge and discharge efficiency of the cross section of the secondary particle under a high voltage in which the upper limit voltage is set to 4.45 V are shown in Table 1.

(Example 5)

Manufacturing of Positive Electrode Active Material 5 for Lithium Secondary Battery

[Step of Manufacturing Nickel Cobalt Manganese Composite Hydroxide]

After water was poured into a reaction tank equipped with a stirrer and an overflow pipe, an aqueous solution of sodium hydroxide was added thereto, and the liquid temperature was maintained at 50°C.

An aqueous solution of nickel sulfate, an aqueous solution of cobalt sulfate, and an aqueous solution of manganese sulfate were mixed so that the atomic ratio of nickel atoms, cobalt atoms, and manganese atoms became 0.55:0.21:0.24, whereby a mixed raw material solution was prepared.

Next, this mixed raw material solution and an aqueous solution of ammonium sulfate as a complexing agent were continuously added to a reaction tank having a volume of 500 L under stirring, and nitrogen gas mixed with air was continuously aerated. An aqueous solution of sodium hydroxide was timely added dropwise such that the pH of the solution in the reaction tank reached 10.8 when measured at 40°C, an aqueous solution of ammonium sulfate was continuously added such that the NH3 concentration in the reaction tank reached 2.6 g/L, and the components were continuously stirred at 750 rpm, thereby obtaining nickel cobalt manganese composite hydroxide particles. The nickel cobalt manganese composite hydroxide particles were washed with a sodium hydroxide solution, dehydrated and isolated with a centrifugal separator, and dried at 105°C, thereby obtaining a nickel cobalt manganese composite hydroxide 5.

[Mixing Step]

The nickel cobalt manganese composite hydroxide 5 obtained as described above and lithium carbonate powder were weighed such that Li/(Ni + Co + Mn) reached 1.07 and mixed together.

[Calcining Step]

After that, the mixture obtained in the mixing step was held in an oxygen atmosphere at 760°C for 4 hours and was then calcined at 910°C for 6 hours by increasing the temperature. Whereby a positive electrode active material 5 for a lithium secondary battery was obtained.

Evaluation of Positive Electrode Active Material 5 for Lithium Secondary Battery

Compositional analysis of the obtained positive electrode active material 5 for a lithium secondary battery was performed, the composition was matched to Composition Formula (I), and it was found that x = 0.027, y = 0.207, z = 0.240, and w = 0.

The results of the content proportion of the reference primary particles in each of the surface part and the central part of the secondary particle in the positive electrode active material 5 for a lithium secondary battery, the difference between the average value of the aspect ratios of the primary particles present in the surface part of the secondary particle and the average value of the aspect ratios of the primary particles present in the central part, the average value of the aspect ratios of the primary particles present in the surface part of the secondary particle, the average value of the aspect ratios of the primary particles present in the central part of the secondary particle, the average value of the longest diameters x of the primary particles present in the surface part, the average value of the maximum diameters y perpendicular to the longest diameters x of the primary particles present in the surface part, the average value of the longest diameters x of the primary particles present in the central part, the average value of the maximum diameters y perpendicular to the longest diameters x of the primary particles present in the central part, and the initial charge and discharge efficiency of the cross section of the secondary particle under a high voltage in which the upper limit voltage is set to 4.45 V are shown in Table 1.

(Example 6)

Manufacturing of Positive Electrode Active Material 6 for Lithium Secondary Battery

[Step of Manufacturing Nickel Cobalt Manganese Composite Hydroxide]

After water was poured into a reaction tank equipped with a stirrer and an overflow pipe, an aqueous solution of sodium hydroxide was added thereto, and the liquid temperature was maintained at 50°C.

An aqueous solution of nickel sulfate, an aqueous solution of cobalt sulfate, and an aqueous solution of manganese sulfate were mixed so that the atomic ratio of nickel atoms, cobalt atoms, and manganese atoms became 0.55:0.21:0.24, whereby a mixed raw material solution was prepared.

Next, this mixed raw material solution and an aqueous solution of ammonium sulfate as a complexing agent were continuously added to a reaction tank having a volume of 500 L under stirring, and nitrogen gas mixed with air was continuously aerated. An aqueous solution of sodium hydroxide was timely added dropwise such that the pH of the solution in the reaction tank reached 11.12 when measured at 40°C, an aqueous solution of ammonium sulfate was continuously added such that the NH3 concentration in the reaction tank reached 6.3 g/L, and the components were continuously stirred at 750 rpm, thereby obtaining nickel cobalt manganese composite hydroxide particles. The nickel cobalt manganese composite hydroxide particles were washed with a sodium hydroxide solution, dehydrated and isolated with a centrifugal separator, and dried at 105°C, thereby obtaining a nickel cobalt manganese composite hydroxide 6.

[Mixing Step]

The nickel cobalt manganese composite hydroxide 6 obtained as described above and lithium carbonate powder were weighed such that Li/(Ni + Co + Mn) reached 1.07 and mixed together.

[Calcining Step]

After that, the mixture obtained in the mixing step was held in an oxygen atmosphere at 760°C for 1 hours and was then calcined at 910°C for 6 hours by increasing the temperature. Whereby a positive electrode active material 6 for a lithium secondary battery was obtained.

Evaluation of Positive Electrode Active Material 6 for Lithium Secondary Battery

Compositional analysis of the obtained positive electrode active material 6 for a lithium secondary battery was performed, the composition was matched to Composition Formula (I), and it was found that x = 0.03, y = 0.207, z = 0.242, and w = 0.

The results of the content proportion of the reference primary particles in each of the surface part and the central part of the secondary particle in the positive electrode active material 6 for a lithium secondary battery, the difference between the average value of the aspect ratios of the primary particles present in the surface part of the secondary particle and the average value of the aspect ratios of the primary particles present in the central part, the average value of the aspect ratios of the primary particles present in the surface part of the secondary particle, the average value of the aspect ratios of the primary particles present in the central part of the secondary particle, the average value of the longest diameters x of the primary particles present in the surface part, the average value of the maximum diameters y perpendicular to the longest diameters x of the primary particles present in the surface part, the average value of the longest diameters x of the primary particles present in the central part, the average value of the maximum diameters y perpendicular to the longest diameters x of the primary particles present in the central part, and the initial charge and discharge efficiency of the cross section of the secondary particle under a high voltage in which the upper limit voltage is set to 4.45 V are shown in Table 1.

(Comparative Example 1)

Manufacturing of Positive Electrode Active Material C1 for Lithium Secondary Battery

[Step of Manufacturing Nickel Cobalt Manganese Aluminum Composite Hydroxide]

After water was poured into a reaction tank equipped with a stirrer and an overflow pipe, an aqueous solution of sodium hydroxide was added thereto, and the liquid temperature was maintained at 50°C.

An aqueous solution of nickel sulfate, an aqueous solution of cobalt sulfate, and an aqueous solution of manganese sulfate were mixed so that the atomic ratio of nickel atoms, cobalt atoms, and manganese atoms became 0.90:0.07:0.2, whereby a mixed raw material solution was prepared.

Next, this mixed raw material solution, an aqueous solution of aluminum sulfate, and an aqueous solution of ammonium sulfate as a complexing agent were continuously added to a reaction tank having a volume of 15 L under stirring, and nitrogen gas was continuously aerated. The aqueous solution of aluminum sulfate was added at an adjusted flow rate such that the atomic ratio of nickel atoms, cobalt atoms, manganese atoms, and aluminum atoms reached 0.90:0.07:0.02:0.01. An aqueous solution of sodium hydroxide was timely added dropwise such that the pH of the solution in the reaction tank reached 12.3 when measured at 40°C, an aqueous solution of ammonium sulfate was continuously added such that the NH3 concentration in the reaction tank reached 5.8 g/L, and the components were continuously stirred at 1500 rpm, thereby obtaining nickel cobalt manganese aluminum composite hydroxide particles. The nickel cobalt manganese aluminum composite hydroxide particles were washed with a sodium hydroxide solution, dehydrated, isolated, and dried at 105°C, thereby obtaining a nickel cobalt manganese aluminum composite hydroxide C1.

[Mixing Step]

The nickel cobalt manganese aluminum composite hydroxide C1 obtained as described above and lithium hydroxide powder were weighed such that Li/(Ni + Co + Mn + Al) reached 1.03 and mixed together.

[Calcining Step]

After that, the mixture obtained in the mixing step was held in an oxygen atmosphere at 700°C for 5 hours and was then calcined at 760°C for 10 hours by increasing the temperature. Whereby a positive electrode active material C1 for a lithium secondary battery was obtained.

Evaluation of Positive Electrode Active Material C1 for Lithium Secondary Battery

Compositional analysis of the obtained positive electrode active material C1 for a lithium secondary battery was performed, the composition was matched to Composition Formula (I), and it was found that x = -0.005, y = 0.069, z = 0.02, and w = 0.012.

The results of the content proportion of the reference primary particles in each of the surface part and the central part of the secondary particle in the positive electrode active material C1 for a lithium secondary battery, the difference between the average value of the aspect ratios of the primary particles present in the surface part of the secondary particle and the average value of the aspect ratios of the primary particles present in the central part, the average value of the aspect ratios of the primary particles present in the surface part of the secondary particle, the average value of the aspect ratios of the primary particles present in the central part of the secondary particle, the average value of the longest diameters x of the primary particles present in the surface part, the average value of the maximum diameters y perpendicular to the longest diameters x of the primary particles present in the surface part, the average value of the longest diameters x of the primary particles present in the central part, the average value of the maximum diameters y perpendicular to the longest diameters x of the primary particles present in the central part, and the initial charge and discharge efficiency of the cross section of the secondary particle under a high voltage in which the upper limit voltage is set to 4.45 V are shown in Table 1.

(Comparative Example 2)

Manufacturing of Positive Electrode Active Material C2 for Lithium Secondary Battery

[Step of Manufacturing Nickel Cobalt Manganese Aluminum Composite Hydroxide]

After water was poured into a reaction tank equipped with a stirrer and an overflow pipe, an aqueous solution of sodium hydroxide was added thereto, and the liquid temperature was maintained at 45°C.

An aqueous solution of nickel sulfate, an aqueous solution of cobalt sulfate, and an aqueous solution of manganese sulfate were mixed so that the atomic ratio of nickel atoms, cobalt atoms, and manganese atoms became 0.855:0.095:0.02, whereby a mixed raw material solution was prepared.

Next, this mixed raw material solution, an aqueous solution of aluminum sulfate, and an aqueous solution of ammonium sulfate as a complexing agent were continuously added to a reaction tank having a volume of 500 L under stirring, and nitrogen gas mixed with air was continuously aerated. The aqueous solution of aluminum sulfate was added at an adjusted flow rate such that the atomic ratio of nickel atoms, cobalt atoms, manganese atoms, and aluminum atoms reached 0.855:0.095:0.02:0.03. An aqueous solution of sodium hydroxide was timely added dropwise such that the pH of the solution in the reaction tank reached 12.66 when measured at 40°C, an aqueous solution of ammonium sulfate was continuously added such that the NH3 concentration in the reaction tank reached 7.3 g/L, and the components were continuously stirred at 750 rpm, thereby obtaining nickel cobalt manganese aluminum composite hydroxide particles. The nickel cobalt manganese aluminum composite hydroxide particles were washed with a sodium hydroxide solution, dehydrated and isolated with a centrifugal separator, and dried at 105°C, thereby obtaining a nickel cobalt manganese aluminum composite hydroxide C2.

[Mixing Step]

The nickel cobalt manganese composite hydroxide C2 obtained as described above and lithium hydroxide powder were weighed such that Li/(Ni + Co + Mn + Al) reached 1.03 and mixed together.

[Calcining Step]

After that, the mixture obtained in the mixing step was calcined in an oxygen atmosphere at 770°C for 5 hours to obtain a positive electrode active material C2 for a lithium secondary battery.

Evaluation of Positive Electrode Active Material C2 for Lithium Secondary Battery

Compositional analysis of the obtained positive electrode active material C2 for a lithium secondary battery was performed, the composition was matched to Composition Formula (I), and it was found that x = 0.002, y = 0.094, z = 0.02, and w = 0.029.

The results of the content proportion of the reference primary particles in each of the surface part and the central part of the secondary particle in the positive electrode active material C2 for a lithium secondary battery, the difference between the average value of the aspect ratios of the primary particles present in the surface part of the secondary particle and the average value of the aspect ratios of the primary particles present in the central part, the average value of the aspect ratios of the primary particles present in the surface part of the secondary particle, the average value of the aspect ratios of the primary particles present in the central part of the secondary particle, the average value of the longest diameters x of the primary particles present in the surface part, the average value of the maximum diameters y perpendicular to the longest diameters x of the primary particles present in the surface part, the average value of the longest diameters x of the primary particles present in the central part, the average value of the maximum diameters y perpendicular to the longest diameters x of the primary particles present in the central part, and the initial charge and discharge efficiency of the cross section of the secondary particle under a high voltage in which the upper limit voltage is set to 4.45 V are shown in Table 1.

(Comparative Example 3)

Manufacturing of Positive Electrode Active Material C3 for Lithium Secondary Battery

[Step of Manufacturing Nickel Cobalt Manganese Composite Hydroxide]

After water was poured into a reaction tank equipped with a stirrer and an overflow pipe, an aqueous solution of sodium hydroxide was added thereto, and the liquid temperature was maintained at 58°C.

An aqueous solution of nickel sulfate, an aqueous solution of cobalt sulfate, and an aqueous solution of manganese sulfate were mixed so that the atomic ratio of nickel atoms, cobalt atoms, and manganese atoms became 0.855:0.095:0.05, whereby a mixed raw material solution was prepared.

Next, this mixed raw material solution and an aqueous solution of ammonium sulfate as a complexing agent were continuously added to a reaction tank having a volume of 500 L under stirring, and nitrogen gas was continuously aerated. An aqueous solution of sodium hydroxide was timely added dropwise such that the pH of the solution in the reaction tank reached 12.75 when measured at 40°C, an aqueous solution of ammonium sulfate was continuously added such that the NH3 concentration in the reaction tank reached 6.3 g/L, and the components were continuously stirred at 750 rpm, thereby obtaining nickel cobalt manganese composite hydroxide particles. The nickel cobalt manganese composite hydroxide particles were washed with a sodium hydroxide solution, dehydrated and isolated with a centrifugal separator, and dried at 105°C, thereby obtaining a nickel cobalt manganese composite hydroxide C3.

[Mixing Step]

The nickel cobalt manganese composite hydroxide C3 obtained as described above and lithium hydroxide powder were weighed such that Li/(Ni + Co + Mn) reached 1.05 and mixed together.

[Calcining Step]

After that, the mixture obtained in the mixing step was calcined in an oxygen atmosphere at 770°C for 5 hours to obtain a positive electrode active material C3 for a lithium secondary battery.

Evaluation of Positive Electrode Active Material C3 for Lithium Secondary Battery

Compositional analysis of the obtained positive electrode active material C3 for a lithium secondary battery was performed, the composition was matched to Composition Formula (I), and it was found that x = 0.02, y = 0.095, z = 0.05, and w = 0.

The results of the content proportion of the reference primary particles in each of the surface part and the central part of the secondary particle in the positive electrode active material C3 for a lithium secondary battery, the difference between the average value of the aspect ratios of the primary particles present in the surface part of the secondary particle and the average value of the aspect ratios of the primary particles present in the central part, the average value of the aspect ratios of the primary particles present in the surface part of the secondary particle, the average value of the aspect ratios of the primary particles present in the central part of the secondary particle, the average value of the longest diameters x of the primary particles present in the surface part, the average value of the maximum diameters y perpendicular to the longest diameters x of the primary particles present in the surface part, the average value of the longest diameters x of the primary particles present in the central part, the average value of the maximum diameters y perpendicular to the longest diameters x of the primary particles present in the central part, and the initial charge and discharge efficiency of the cross section of the secondary particle under a high voltage in which the upper limit voltage is set to 4.45 V are shown in Table 1.

[Table 1]

| | Positive electrode active material | x | y | z | w | (A) | | (B) | (C) | (D) | (E) | (F) | (G) | (H) | 4.45 V charge and discharge efficiency (%) |
| | | | | | | Surface part | Central part | | | | | | | | |
|---|---|---|---|---|---|---|---|---|---|---|---|---|---|---|---|
| Example 1 | Positive electrode active material 1 | 0.053 | 0.101 | 0.000 | 0.000 | 57 | 35 | 0.377 | 2.303 | 1.926 | 0.973 | 0.429 | 0.799 | 0.436 | 91.4 |
| Example 2 | Positive electrode active material 2 | 0.055 | 0.099 | 0.000 | 0.000 | 58 | 27 | 0.529 | 2.258 | 1.729 | 0.856 | 0.369 | 0.598 | 0.351 | 90.9 |
| Example 3 | Positive electrode active material 3 | 0.010 | 0.071 | 0.021 | 0.009 | 56 | 27 | 0.535 | 2.240 | 1.705 | 0.453 | 0.209 | 0.342 | 0.201 | 89.5 |
| Example 4 | Positive electrode active material 4 | -0.011 | 0.094 | 0.020 | 0.028 | 44 | 22 | 0.325 | 2.105 | 1.780 | 0.811 | 0.407 | 0.637 | 0.379 | 88.1 |
| Example 5 | Positive electrode active material 5 | 0.027 | 0.207 | 0.240 | 0.000 | 55 | 35 | 0.442 | 2.379 | 1.937 | 0.998 | 0.454 | 0.674 | 0.382 | 88.0 |
| Example 6 | Positive electrode active material 6 | 0.030 | 0.207 | 0.242 | 0.000 | 55 | 27 | 0.314 | 2.155 | 1.841 | 0.944 | 0.478 | 0.810 | 0.466 | 87.0 |
| Comparative Example 1 | Positive electrode active material C1 | -0.005 | 0.069 | 0.020 | 0.012 | 22 | 13 | 0.127 | 1.702 | 1.575 | 0.307 | 0.190 | 0.310 | 0.205 | 78.5 |

(continued)

| | Positive electrode active material | x | y | z | w | (A) | | (B) | (C) | (D) | (E) | (F) | (G) | (H) | 4.45 V charge and discharge efficiency (%) |
|---|---|---|---|---|---|---|---|---|---|---|---|---|---|---|---|
| | | | | | | Surface part | Central part | | | | | | | | |
| Comparative Example 2 | Positive electrode active material C2 | 0.002 | 0.094 | 0.020 | 0.029 | 25 | 18 | 0.292 | 1.878 | 1.586 | 0.723 | 0.410 | 0.456 | 0.302 | 81.8 |
| Comparative Example 3 | Positive electrode active material C3 | 0.020 | 0.095 | 0.050 | 0.000 | 26 | 17 | 0.150 | 1.801 | 1.651 | 0.643 | 0.380 | 0.345 | 0.221 | 79.9 |

In Table 1, (A) to (H) mean the following items.

(A): Content proportion of reference primary particles present in each of surface part and central part of secondary particle,
unit: %.
(B): Difference between average value of aspect ratios of primary particles present in surface part of secondary particle and average value of aspect ratios of primary particles present in central part
(C): Average value of aspect ratio of primary particles present in surface part of secondary particle
(D): Average value of aspect ratio of primary particles present in central part of secondary particle
(E): Average value of longest diameters x of primary particles present in surface part, unit: μm
(F): Average value of maximum diameters y perpendicular to longest diameters x of primary particles present in surface part, unit: μm
(G): Average value of longest diameters x of primary particles present in central part, unit: μm
(H): Average value of maximum diameters y perpendicular to longest diameters x of primary particles present in central part, unit: μm

As shown in Table 1, in the positive electrode active materials for a lithium secondary battery of Examples 1 to 6, the charge and discharge efficiencies under a high voltage in which the upper limit voltage was set to 4.45 V were higher by approximately 5% than the charge and discharge efficiencies in Comparative Examples 1 to 3.

[Reference Signs List]

1:    Separator
2:    Positive electrode
3:    Negative electrode
4:    Electrode group
5:    Battery can
6:    Electrolytic solution
7:    Top insulator
8:    Sealing body
10:   Lithium secondary battery
21:   Positive electrode lead
31:   Negative electrode lead

**Claims**

1. A lithium composite metal oxide comprising:

   a secondary particle that is an aggregate of primary particles,
   wherein, when a cross-sectional image of the secondary particle is acquired, and the cross-sectional image is observed, a content proportion of reference primary particles present in a central part of the secondary particle is 20% or more and 50% or less, and a content proportion of reference primary particles present in a surface part of the secondary particle is 30% or more and 100% or less,
   (here, the reference primary particles refer to primary particles that are observed in the cross-sectional image of the secondary particle and have an aspect ratio of 2.0 or more,
   the central part refers to a part surrounded by an imaginary circle, which has a center at a centroid position of a figure surrounded by an outer edge of the cross-sectional image of the secondary particle and has a radius of r calculated from the following expression in which an area of the figure is denoted by S,

$$r = (S/\pi)^{0.5}/2$$

   the surface part refers to a part obtained by removing the imaginary circle from the figure).

2. A lithium composite metal oxide comprising:

   a secondary particle that is an aggregate of primary particles,
   wherein, in a surface part of the secondary particle, the primary particles that have an elongated shape are radially arranged and aggregated outward from a center of the secondary particle,
   a content proportion of the reference primary particles present in a central part of the secondary particle is lower than a proportion of the reference primary particles present in the surface part,
   when a cross-sectional image of the secondary particle is acquired, and the cross-sectional image is observed, the content proportion of the reference primary particles present in the central part of the secondary particle is 20% or more and 50% or less, and the content proportion of the reference primary particles present in the surface part of the secondary particle is 30% or more and 100% or less,
   (here, the reference primary particles refer to primary particles that are observed in the cross-sectional image of the secondary particle and have an aspect ratio of 2.0 or more,
   the central part refers to a part surrounded by an imaginary circle, which has a center at a centroid position of a figure surrounded by an outer edge of the cross-sectional image of the secondary particle and has a radius of r calculated from the following expression in which an area of the figure is denoted by S,

$$r = (S/\pi)^{0.5}/2$$

   the surface part refers to a part obtained by removing the imaginary circle from the figure).

3. The lithium composite metal oxide according to claim 2,
   wherein the content proportion of the reference primary particles present in the central part of the secondary particles is 20% or more and less than 40%, and the content proportion of the reference primary particles present in the surface part of the secondary particles is 40% or more and 100% or less.

4. The lithium composite metal oxide according to any one of claims 1 to 3,
   wherein, in the cross-sectional image, a difference between an average value of aspect ratios of the primary particles present in the central part of the secondary particle and an average value of aspect ratios of the primary particles present in the surface part of the secondary particles is 0.30 or more and 1.0 or less.

5. The lithium composite metal oxide according to any one of claims 1 to 4,
   wherein, in the cross-sectional image, an average value of the aspect ratios of the primary particles present in the surface part of the secondary particle is 1.85 or more and 3.00 or less.

6. The lithium composite metal oxide according to any one of claims 1 to 5,
   wherein, in the cross-sectional image, an average value of the aspect ratios of the primary particles present in the central part of the secondary particle is 1.66 or more and 2.00 or less.

7. The lithium composite metal oxide according to any one of claims 1 to 6,
   wherein the lithium composite metal oxide is represented by Formula (I),

$$Li[Li_x(Ni_{(1-y-z-w)}Co_yMn_zM_w)_{1-x}]O_2 \ldots \qquad (I)$$

   (in Formula (I), $-0.1 \leq x \leq 0.2$, $0 \leq y \leq 0.5$, $0 \leq z \leq 0.5$, $0 \leq w \leq 0.1$, and $y + z + w < 1$ are satisfied, and M represents one or more elements selected from the group consisting of Mg, Ca, Sr, Ba, Zn, B, Al, Ga, Ti, Zr, Ge, Fe, Cu, Cr, V, W, Mo, Sc, Y, Nb, La, Ta, Tc, Ru, Rh, Pd, Ag, Cd, In, and Sn).

8. The lithium composite metal oxide according to claim 7,
   wherein a range of x in Formula (I) satisfies $0 < x \leq 0.2$.

9. A positive electrode active material for a lithium secondary battery, comprising:
   the lithium composite metal oxide according to any one of claims 1 to 8.

10. A positive electrode for a lithium secondary battery, comprising:
    the positive electrode active material for a lithium secondary battery according to claim 9.

**11.** A lithium secondary battery comprising:
the positive electrode for a lithium secondary battery according to claim 10.

FIG. 1A

FIG. 1B

FIG. 2

FIG. 3

FIG. 4

# EP 3 770 121 A1

| | INTERNATIONAL SEARCH REPORT | International application No. |
|---|---|---|
| | | PCT/JP2019/012264 |

**A. CLASSIFICATION OF SUBJECT MATTER**
Int.Cl. C01G53/00(2006.01)i, H01M4/505(2010.01)i, H01M4/525(2010.01)i

According to International Patent Classification (IPC) or to both national classification and IPC

**B. FIELDS SEARCHED**

Minimum documentation searched (classification system followed by classification symbols)
Int.Cl. C01G53/00, H01M4/505, H01M4/525

Documentation searched other than minimum documentation to the extent that such documents are included in the fields searched
Published examined utility model applications of Japan     1922–1996
Published unexamined utility model applications of Japan     1971–2019
Registered utility model specifications of Japan     1996–2019
Published registered utility model applications of Japan     1994–2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-506156 A (LG CHEM, LTD.) 01 March 2018 & US 2018/0013129 A1 & WO 2016/204563 A1 & EP 3312912 A1 & KR 10-2016-0149162 A & CN 107408667 A | 1–11 |
| A | JP 2017-533568 A (ECOPRO BM CO.) 09 November 2017 & US 2016/0181597 A1 & WO 2016/021791 A1 & KR 10-1568263 B & CN 105453311 A | 1–11 |

☒   Further documents are listed in the continuation of Box C.     ☐   See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 14 May 2019 (14.05.2019) | 28 May 2019 (28.05.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

36

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2016/002158 A1 (SANYO ELECTRIC CO., LTD.) 07 January 2016 (Family: none) | 1-11 |
| A | US 2014/0158932 A1 (IUCF-HYU (INDUSTRY-UNIVERSITY COOPERATION FOUNDATION HANYANGUNIVERSITY)) 12 June 2014 & WO 2013/183974 A1 & EP 2882013 A1 & KR 10-2013-0138073 A & CN 104521039 A | 1-11 |
| A | WO 2018/020845 A1 (SUMITOMO METAL MINING CO., LTD.) 01 February 2018 (Family: none) | 1-11 |
| A | WO 2006/118279 A1 (NISSAN MOTOR CO., LTD.) 09 November 2006 & US 2009/0029253 A1 & EP 1876664 A1 & KR 10-2010-0099337 A & CN 101167209 A | 1-11 |
| A | WO 2016/175597 A1 (LG CHEM. LTD.) 03 November 2016 & JP 2018-515884 A & US 2018/0108940 A1 & EP 3291340 A1 & KR 10-2016-0129764 A & CN 107534140 A | 1-11 |

Form PCT/ISA/210 (continuation of second sheet) (January 2015)

**EP 3 770 121 A1**

**Patent documents cited in the description**

- JP 2018056857 A
- WO 2016002158 A
- JP 2002201028 A